# EUROPEAN PATENT APPLICATION

(11) **EP 4 660 065 A1**
(43) Date of publication of application: **10.12.2025**
(21) Application number: 25180646.9
(22) Date of filing: 04.06.2025
(51) Int. Cl.: B62J 17/00

(54) **WING MEMBER AND STRADDLED VEHICLE**

(30) Priority: 06.06.2024 JP 2024092288
(71) Applicant: Yamaha Hatsudoki Kabushiki Kaisha, Iwata-shi, Shizuoka 438-8501 (JP)
(72) Inventor: NAGANO, Takuya, Iwata-shi, 4388501 (JP); ASAI, Osamu, Iwata-shi, 4388501 (JP); KAWAGUCHI, Takahiro, Iwata-shi, 4388501 (JP); HIRONO, Kanako, Iwata-shi, 4388501 (JP)
(74) Representative: Studio Torta S.p.A.

(57) **Abstract**

There is disclosed a wing member (30) for a straddled vehicle (1) including a support (40) and a wing (50); the wing (50) being supported by the support (40); the support (40) having a front end (40a); the wing (50) including a forward protrusion (60); the forward protrusion (60) being located more forward than the front end (40a); the support (40) including a first attachment portion (41), a second attachment portion (42), and an arm (43); the first attachment portion (41) being attached to the vehicle body (3) and joined to the wing (50); the second attachment portion (42) being disposed more rearward than the first attachment portion (41) and is attached to the vehicle body (3); the arm (43) being joined to the second attachment portion (42) and is joined to the wing (50); the wing (50) having a trailing edge (54) in vehicle plan view; the trailing edge (54) including a curved portion (55) that curves convexly forward in vehicle plan view.

## Description

### Technical Field

The present invention relates to a wing member and a straddled vehicle.

### Prior Art

Japanese Unexamined Patent Publication 2019-189089 A discloses a straddled vehicle. The straddled vehicle includes a wing member. The wing member generates a downforce.

The wing member includes an attachment portion and a wing. The attachment portion is attached to a cowl of the straddled vehicle. The wing extends in a transverse direction of the straddled vehicle from the attachment portion. More specifically, the wing extends rearward toward the outside in the transverse direction of the straddled vehicle. The wing generates a downforce.

In Japanese Unexamined Patent Publication 2019-189089 A, the wing extends outward in the transverse direction of the straddled vehicle and rearward from the attachment portion. Therefore, it is difficult for the wing member to generate a downforce at a relatively front position.

When it is difficult to generate the downforce at a relatively forward position, it is difficult to cause the downforce to act on the front wheel.

The present invention has been made in view of such circumstances, and an object thereof is to provide a wing member that generates a downforce at a relatively forward position, and a straddled vehicle including the wing member.

First, it has been considered to extend the wing more forward than a support. The support is a general term for the attachment portion. For example, the wing includes a forward protrusion. The forward protrusion is located more forward than the front end of the support. Alternatively, the wing includes a front end. The front end of the wing is located more forward than a front end of the support. When the wing extends more forward than the support, it is easy for the wing member to generate a downforce in a relatively forward position.

However, a new problem arises when the wing extends more forward than the support. A new problem is that it is difficult to firmly support the wing. As a result, it is difficult for the wing member to have sufficient rigidity. It is difficult for the wing member to have sufficient strength.

Therefore, studies for solving the new problem have been further conducted. Specifically, the structure of the wing member was further investigated in order to provide a wing member that generates a downforce in a relatively forward position and has sufficient rigidity or strength.

### Description of the invention

The present invention is based on these studies. The present invention is constituted as stated below.

According to preferred embodiments, it is provided:
a wing member for a straddled vehicle, the wing member including:
a support; and
a wing supported by the support; wherein
the support includes a front end,
the wing includes a forward protrusion located more forward than the front end of the support,
the support includes:
   a first attachment portion attached to a vehicle body of the straddled vehicle and joined to the wing;
   a second attachment portion disposed more rearward than the first attachment portion and attached to the vehicle body of the straddled vehicle; and
   an arm joined to the second attachment portion and joined to the wing,
   the wing includes a trailing edge in a plan view of the straddled vehicle, and
   the trailing edge of the wing includes a curved portion that curves convexly forward in a plan view of the straddled vehicle.

The wing member is for a straddled vehicle. The wing member includes the support and the wing. The wing is supported by the support. The support includes the front end. The wing includes the forward protrusion. The forward protrusion is located more forward than the front end of the support. Thus, the wing extends more forward than the support. The wing generates a downforce. Therefore, it is easy for the wing member to generate the downforce at a relatively front position. In other words, it is easy to further shift the generation position of the downforce forward. For example, it is easy for the wing member to generate the downforce at a position more forward than the front end of the support.

The support includes the first attachment portion, the second attachment portion, and the arm. The first attachment portion is attached to the vehicle body of the straddled vehicle. The first attachment portion is joined to the wing. The second attachment portion is disposed more rearward than the first attachment portion. The second attachment portion is attached to the vehicle body of the straddled vehicle. The arm is joined to the second attachment portion. The arm is joined to the wing. In short, the support supports the wing by both the first attachment portion and the second attachment portion. In this way, the support has a structure suitable for firmly supporting the wing.

The wing includes the trailing edge in a plan view of the straddled vehicle. The trailing edge can be rephrased as a "rear edge." The trailing edge of the wing includes the curved portion. The curved portion of the trailing edge of the wing curves convexly forward in a plan view of the straddled vehicle. Therefore, it is easy to reduce the weight of the wing. Furthermore, it is easy to reduce the air resistance of the wing. Thus, the wing has a shape suitable for firmly supporting the wing.

As mentioned above, the structure of the support is suitable for firmly supporting the wing. The shape of the wing is also suitable for firmly supporting the wing. Therefore, it is easy to firmly support the wing. As a result, it is easy for the wing member to have sufficient rigidity. It is easy for the wing member to have sufficient strength.

In summary, the wing member generates the downforce at a relatively forward position. The wing member has sufficient rigidity. The wing member has sufficient strength.

It is preferred in the wing member that
at least part of the forward protrusion is disposed more outward than the front end of the support in the transverse direction of the straddled vehicle.

Therefore, the downforce generated by the forward protrusion has an appropriate magnitude.

It is preferred in the wing member that
the entirety of the forward protrusion is disposed more outward than the front end of the support in the transverse direction of the straddled vehicle.

Therefore, the downforce generated by the forward protrusion has an appropriate magnitude.

It is preferred in the wing member that
the trailing edge of the wing includes a front end, and
at least part of the forward protrusion is disposed more outward than the front end of the trailing edge of the wing in the transverse direction of the straddled vehicle.

Therefore, the downforce generated by the forward protrusion has an appropriate magnitude.

It is preferred in the wing member that
the wing includes a front end, and
the front end of the wing is disposed more outward than the front end of the support in the transverse direction of the straddled vehicle.

Therefore, the downforce generated by the forward protrusion has an appropriate magnitude.

It is preferred in the wing member that
the wing includes a first length in the transverse direction of the straddled vehicle,
the forward protrusion includes a second length in the transverse direction of the straddled vehicle, and
the second length is 50% or more of the first length.

Therefore, it is easy to increase the downforce generated by the forward protrusion.

It is preferred in the wing member that
the second length is 60% or more of the first length.

Therefore, it is easier to increase the downforce generated by the forward protrusion.

It is preferred in the wing member that
the second length is 70% or more of the first length.

Therefore, it is easier to increase the downforce generated by the forward protrusion.

It is preferred in the wing member that
the second length is 80% or more of the first length.

Therefore, it is easier to increase the downforce generated by the forward protrusion.

It is preferred in the wing member that
the second length is 90% or more of the first length.

Therefore, it is easier to increase the downforce generated by the forward protrusion.

It is preferred in the wing member that
the wing includes a leading edge in a plan view of the straddled vehicle, and
the leading edge of the wing includes a first leading edge portion extending forward from the first attachment portion.

Therefore, it is easy for the wing to include the forward protrusion. Here, the leading edge of the wing can be rephrased as a "front edge of the wing."

It is preferred in the wing member that
the first leading edge portion extends forward and outward in the transverse direction of the straddled vehicle from the first attachment portion.

Therefore, it is easy to dispose at least part of the forward protrusion more outward than the front end of the support in the transverse direction of the straddled vehicle.

It is preferred in the wing member that
the leading edge of the wing includes:
a second leading edge portion extending outward in a transverse direction of the straddled vehicle from the first leading edge portion; and
a third leading edge portion extending rearward from the second leading edge portion, and
the second leading edge portion is disposed more forward than the front end of the support.

The second leading edge portion extends outward in the transverse direction of the straddled vehicle from the first leading edge portion. The third leading edge portion extends rearward from the second leading edge portion. Therefore, it is easy to dispose at least part of the second leading edge portion more outward than the front end of the support in the transverse direction of the straddled vehicle. The second leading edge portion is disposed more forward than the front end of the support. Therefore, the second leading edge portion constitutes at least part of the forward protrusion. Therefore, it is easy to dispose at least part of the forward protrusion more outward than the front end of the support in the transverse direction of the straddled vehicle.

It is preferred in the wing member that
the wing includes:
a proximal portion joined to the first attachment portion;
an intermediate portion located more outward than the proximal portion in the transverse direction of the straddled vehicle; and
a distal portion located more outward than the intermediate portion in the transverse direction of the straddled vehicle, wherein
the proximal portion includes a third length in the longitudinal direction of the straddled vehicle,
the intermediate portion includes a fourth length in the longitudinal direction of the straddled vehicle,
the distal portion includes a fifth length in the longitudinal direction of the straddled vehicle,
the fourth length is shorter than the third length, and
the fourth length is shorter than the fifth length.

The fourth length is the shortest among the third length, the fourth length, and the fifth length. Therefore, it is easy to reduce the weight of the intermediate portion. Furthermore, it is easy to reduce the air resistance of the intermediate portion. Thus, the intermediate portion has a shape suitable for firmly supporting the wing.

The proximal portion is joined to the first attachment portion. As described above, the third length is longer than the fourth length. That is, the proximal portion is long. Therefore, it is easy for the first attachment portion to firmly support the proximal portion. Thus, the proximal portion also has a shape suitable for firmly supporting the wing.

It is preferred in the wing member that
the distal portion is joined to the arm.

The distal portion is joined to the arm. As described above, the fifth length is longer than the fourth length. That is, the distal portion is long. Therefore, it is easy for the arm to firmly support the distal portion. Thus, the distal portion has a shape suitable for firmly supporting the wing.

It is preferred in the wing member that
the wing includes a first exposed portion that is visible in a front view of the straddled vehicle,
the arm includes a second exposed portion that is visible in a front view of the straddled vehicle,
the first exposed portion includes a first area in a front view of the straddled vehicle,
the second exposed portion includes a second area in a front view of the straddled vehicle, and
the second area is less than 30% of the first area.

The first area is sufficiently larger than the second area. Therefore, it is easy for the wing to generate the downforce.

The second area is sufficiently smaller than the first area. For this reason, the air resistance of the arm is relatively low. Therefore, it is easy for the second attachment portion to support the arm.

As described above, the air resistance of the arm is relatively low. Therefore, the influence of the arm on the maximum speed of the straddled vehicle is relatively small. For example, the arm does not significantly reduce the maximum speed of the straddled vehicle.

It is preferred in the wing member that
the second area is less than 20% of the first area.

Therefore, it is easier for the wing to generate the downforce. Further, it is easier for the second attachment portion to support the arm.

It is preferred in the wing member that
the second area is less than 10% of the first area.

Therefore, it is easier for the wing to generate the downforce. Further, it is easier for the second attachment portion to support the arm.

It is preferred in the wing member that
the arm includes:
a first arm joined to the wing; and
a second arm joined to the first arm and joined to the second attachment portion, wherein
the first arm extends in a longitudinal direction of the straddled vehicle in a plan view of the straddled vehicle,
the second arm extends in a transverse direction of the straddled vehicle in a front view of the straddled vehicle,
the second arm is disposed more rearward than the wing, and
the second arm overlaps the wing in a front view of the straddled vehicle.

The first arm extends in the longitudinal direction of straddled vehicle in plan view of the straddled vehicle. Therefore, it is easy to reduce the air resistance of the first arm. In this manner, the first arm has a shape with less air resistance.

The second arm extends in the transverse direction of the straddled vehicle in a front view of the straddled vehicle. The second arm is disposed more rearward than the wing. The second arm has a portion overlapping with the wing in a front view of the straddled vehicle. Therefore, it is easy for the wing to block the second arm from the airflow. Therefore, although the second arm extends in the transverse direction of the straddled vehicle in a front view of the straddled vehicle, it is easy to reduce the air resistance of the second arm. In this manner, the second arm is disposed at a position where the air resistance is small.

As described above, the first arm has a shape with less air resistance. The second arm is disposed at a position where the air resistance is small. Therefore, it is easy to reduce the air resistance of the arm. Therefore, it is easy for the second attachment portion to support the arm.

It is preferred in the wing member that
the wing includes a bottom edge in a front view of the straddled vehicle,
the second arm includes a top edge in a front view of the straddled vehicle, and
the bottom edge of the wing intersects with the top edge of the second arm in a front view of the straddled vehicle.

Therefore, it is easy for the second arm to have a portion overlapping with the wing in a front view of the straddled vehicle.

It is preferred in the wing member that
the wing includes a bottom edge in a front view of the straddled vehicle,
the second arm includes a bottom edge in a front view of the straddled vehicle, and
the bottom edge of the wing intersects with the bottom edge of the second arm in a front view of the straddled vehicle.

Therefore, it is easy for the second arm to have a portion overlapping with the wing in a front view of the straddled vehicle.

It is preferred in the wing member that
the second arm has a plate shape substantially parallel to a longitudinal direction of the straddled vehicle.

Therefore, it is easy to reduce the air resistance of the second arm. **In** this manner, the second arm has a shape with small air resistance. Therefore, it is easier to reduce the air resistance of the arm. Therefore, it is easier for the second attachment portion to support the arm.

It is preferred in the wing member that
the first arm has a plate shape substantially parallel to a longitudinal direction of the straddled vehicle.

Therefore, it is easier to reduce the air resistance of the first arm. In this manner, the first arm has a shape with less air resistance. Therefore, it is easier to reduce the air resistance of the arm. Therefore, it is easier for the second attachment portion to support the arm.

According to preferred embodiments, it is provided: a straddled vehicle including:
a front wheel;
a front axle that supports the front wheel;
a vehicle body; and
a wing member; wherein
the wing member includes,
a support, and
a wing supported by the support,
the support includes a front end,
the wing includes a front end,
the front end of the wing is located more forward than the front end of the support,
the front end of the wing is located more forward than the front axle,
the support includes,
a first attachment portion attached to the vehicle body and joined to the wing,
a second attachment portion disposed more rearward than the first attachment portion and attached to the vehicle body, and
an arm joined to the second attachment portion and joined to the wing,
the wing includes a trailing edge in a plan view of the straddled vehicle, and
the trailing edge of the wing includes a curved portion that curves convexly forward in a plan view of the straddled vehicle.

A straddled vehicle includes the front wheel, the front axle, the vehicle body, and the wing member. The front axle supports the front wheel. The wing member includes the support and the wing. The wing is supported by the support. The support includes the front end. The wing includes the front end. The front end of the wing is located more forward than the front end of the support. Thus, the wing extends forward from the support. The wing generates a downforce. Therefore, it is easy for the wing member to generate the downforce at a relatively front position. For example, it is easy for the wing member to generate the downforce at a position more forward than the front end of the support.

The front end of the wing is located more forward than the front axle. Therefore, it is easier for the wing member to generate a downforce at a relatively front position. Therefore, it is easy to cause the downforce to act on the front wheel.

The support includes the first attachment portion, the second attachment portion, and the arm. The first attachment portion is attached to the vehicle body. The first attachment portion is joined to the wing. The second attachment portion is disposed more rearward than the first attachment portion. The second attachment portion is attached to the vehicle body. The arm is joined to the second attachment portion. The arm is joined to the wing. In short, the support supports the wing by both the first attachment portion and the second attachment portion. In this way, the support has a structure for firmly supporting the wing.

The wing includes the trailing edge in a plan view of the straddled vehicle. The trailing edge can be rephrased as a "rear edge." The trailing edge of the wing includes the curved portion. The curved portion of the trailing edge of the wing curves convexly forward in a plan view of the straddled vehicle. Therefore, it is easy to reduce the weight of the wing. Furthermore, it is easy to reduce the air resistance of the wing. Thus, the wing has a shape suitable for firmly supporting the wing

As mentioned above, the structure of the supports is suitable for firmly supporting the wing. The shape of the wing is also suitable for firmly supporting the wing. Therefore, it is easy to firmly support the wing. As a result, it is easy for the wing member to have sufficient rigidity. It is easy for the wing member to have sufficient strength.

In summary, the straddled vehicle includes the wing member. Therefore, the straddled vehicle generates the downforce at a relatively forward position. Therefore, it is easy to cause the downforce to act on the front wheel. Further, the wing member has sufficient rigidity. The wing member has sufficient strength.

It is preferred in the straddled vehicle that
the vehicle body includes:
a first portion for attaching the first attachment portion;
a second portion for attaching the second attachment portion; and
the first portion and the second portion are inseparable.

Therefore, it is easy to attach the wing member to the vehicle body. It is easy to remove the wing member from the vehicle body.

It is preferred in the straddled vehicle that
the vehicle body includes a front cowl for supporting the support.

Therefore, it is easy to position the front end of the wing more forward than the front axle.

It is preferred in the straddled vehicle that
the vehicle body includes a side cowl for supporting the support.

Therefore, it is easy to position the front end of the wing more forward than the front axle.

It is preferred in the straddled vehicle that
the straddled vehicle includes a headlight, and
the front end of the wing is disposed more forward than the headlight.

Therefore, it is easy to position the front end of the wing more forward than the front axle.

It is preferred in the straddled vehicle that
the straddled vehicle includes a front fork that supports the front axle, and
the front end of the wing is disposed more forward than the front fork.

Therefore, it is easy to position the front end of the wing more forward than the front axle.

It is preferred in the straddled vehicle that the wing member is disposed more outward than the front fork in the transverse direction of the straddled vehicle.

Therefore, the downforce generated by the wing member has an appropriate magnitude.

It is preferred in the straddled vehicle that
the wing member extends from a position more forward than the front fork to a position more rearward than the front fork.

Therefore, the wing member is relatively long in the longitudinal direction of the straddled vehicle. Therefore, it is easy for the wing member to have sufficient rigidity. It is easy for the wing member to have sufficient strength.

It is preferred in the straddled vehicle that
the wing member extends to a position more rearward than the front wheel.

Therefore, the wing member is relatively long in the longitudinal direction of the straddled vehicle. Therefore, it is easy for the wing member to have sufficient rigidity. It is easy for the wing member to have sufficient strength.

It is preferred in the straddled vehicle that
at least part of the second attachment portion is disposed more rearward than the front wheel.

Therefore, even when the wing member extends to a position more rearward than the front wheel, it is easy for the second attachment portion to support the arm and the wing. Therefore, it is easy to extend the wing member to a position more rearward than the front wheel.

### Brief description of the drawings

For the purpose of illustrating the invention, there are shown in the drawings several forms which are presently preferred, it being understood, however, that the invention is not limited to the precise arrangement and instrumentalities shown.
Fig. 1 is a left side view of a straddled vehicle according to an embodiment.
Fig. 2 is a plan view of the straddled vehicle.
Fig. 3 is a front view of the straddled vehicle.
Fig. 4 is a perspective view of a front part of the straddled vehicle.
Fig. 5 is a side view of a left wing member.
Fig. 6 is a plan view of the left wing member.
Fig. 7 is a plan view of a part of the left wing member.
Fig. 8 is a plan view of a part of the left wing member.
Fig. 9 is a cross-sectional view taken along line IX-IX of Fig. 6.
Fig. 10 is a cross-sectional view taken along line X-X illustrated in Fig. 6.
Fig. 11 is a cross-sectional view taken along line XI-XI of Fig. 6.
Fig. 12 is a front view of the left wing member.
Fig. 13 is a front view of the left wing member.
Fig. 14 is a left side view of the front part of the straddled vehicle.
Fig. 15 is a plan view of a part of the straddled vehicle.

### Embodiments of the invention

A straddled vehicle 1 according to this invention will be described hereinafter with reference to the drawings.

### 1. Outline Construction of Straddled Vehicle 1

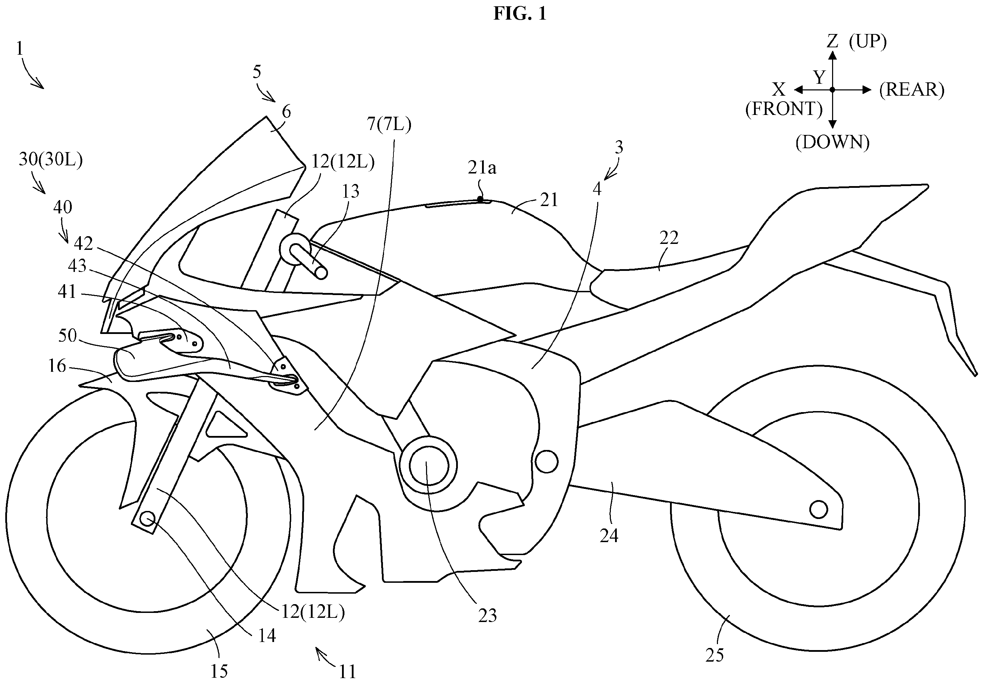

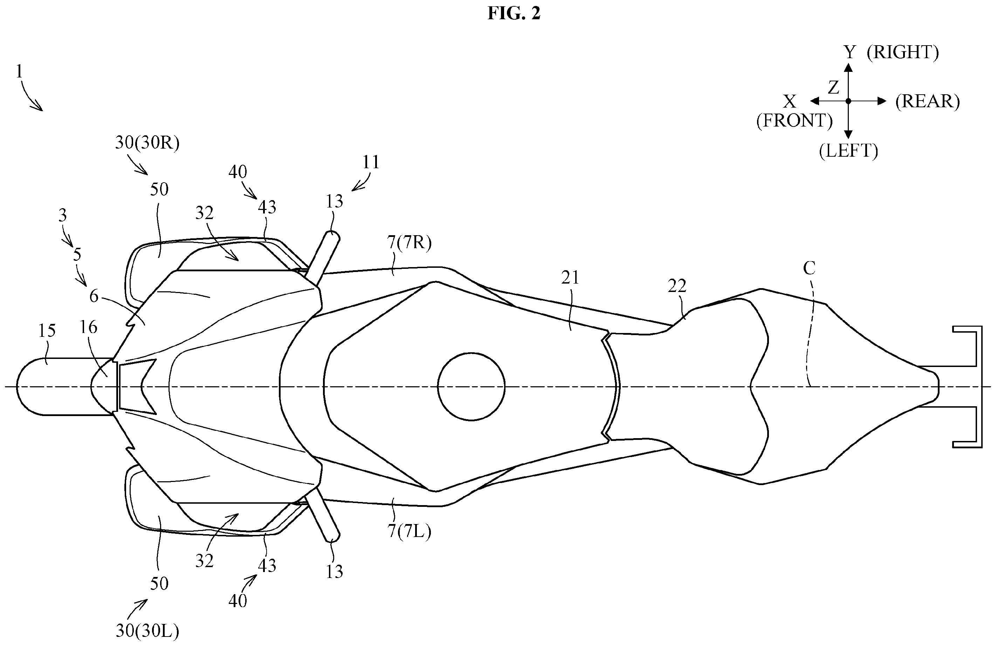

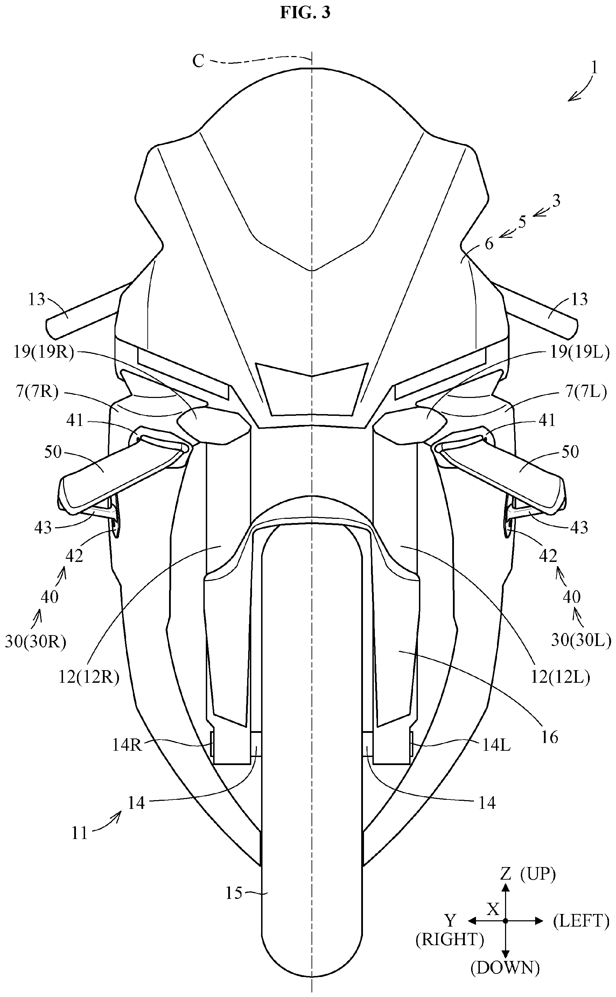

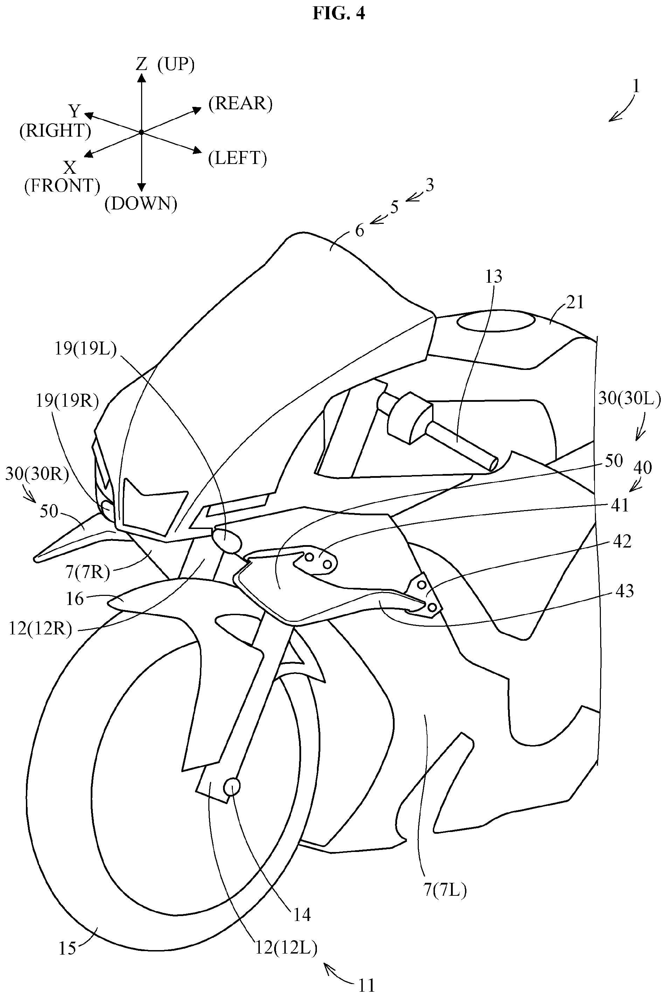

FIG. 1 is a left side view of a straddled vehicle 1 according to an embodiment. Fig. 2 is a plan view of the straddled vehicle 1 according to the embodiment. Fig. 3 is a front view of the straddled vehicle 1 according to the embodiment. Fig. 4 is a perspective view of a front part of the straddled vehicle 1. The straddled vehicle 1 is, for example, a sports-type motorcycle.

Fig. 1 shows a longitudinal direction X, a transverse direction Y, and an up-down direction Z of the straddled vehicle 1. The longitudinal direction X, transverse direction Y, and up-down direction Z are defined with reference to a driver (also called a rider) riding the straddled vehicle 1. The longitudinal direction X, transverse direction Y, and up-down direction Z are perpendicular to one another. The longitudinal direction X and transverse direction Y are horizontal. The up-down direction Z is vertical.

The terms "forward", "rearward", "upward", "downward", "rightward", and "leftward", respectively, mean "forward", "rearward", "upward", "downward", "rightward", and "leftward" as seen from the driver mounted on the straddled vehicle 1. Unless otherwise stated in this specification, "forward" and "rearward" include not only directions parallel to the longitudinal direction X but also directions close to the longitudinal direction X. The directions close to the longitudinal direction X are, for example, directions at angles not exceeding 45 degrees to the longitudinal direction X. Similarly, unless otherwise specified, "rightward" and "leftward" include not only directions parallel to the transverse direction Y but also directions close to the transverse direction Y. Unless otherwise specified, "upward" and "downward" include not only directions parallel to the up-down direction Z but also directions close to the up-down direction Z. For reference, the drawings show the terms FRONT, REAR, UP, DOWN, RIGHT, and LEFT, as appropriate.

In the present specification, "in side view of the straddled vehicle 1" is appropriately referred to as "in vehicle side view". Similarly, "in a plan view of the straddled vehicle 1" is appropriately referred to as "in vehicle plan view". "In a front view of the straddled vehicle 1" is appropriately referred to as "in vehicle front view".

Refer to Fig. 1. The straddled vehicle 1 includes a vehicle body 3. The vehicle body 3 includes a vehicle body frame 4. The vehicle body frame 4 extends from the front part of the straddled vehicle 1 to the rear part of the straddled vehicle 1.

The straddled vehicle 1 includes a steering device 11. The steering device 11 is disposed at the front part of the straddled vehicle 1. The steering device 11 is supported by the vehicle body frame 4. The steering device 11 rotates with respect to the vehicle body frame 4.

The steering device 11 includes a front fork 12, a handlebar 13, and a front axle 14. The front fork 12 is supported by the vehicle body frame 4. The front fork 12 extends downward and forward. The handlebar 13 is supported by the front fork 12. The front axle 14 is supported by the front fork 12. The front axle 14 is disposed lower and more forward than the handlebar 13.

The straddled vehicle 1 includes a front wheel 15. The front wheel 15 is disposed at the front part of the straddled vehicle 1. The front wheel 15 is supported by the steering device 11. Specifically, the front wheel 15 is supported by the front axle 14. The front wheel 15 rotates about the front axle 14. The front wheel 15 is disposed lower than the handlebar 13.

The straddled vehicle 1 includes a front fender 16. The front fender 16 is disposed above the front wheel 15. The front fender 16 is supported by the steering device 11. Specifically, the front fender 16 is supported by the front fork 12.

The straddled vehicle 1 includes a fuel tank 21. The fuel tank 21 is supported by the vehicle body frame 4. The fuel tank 21 is disposed more rearward than the steering device 11. At least part of the fuel tank 21 is disposed at the same height position as the handlebar 13. The fuel tank 21 has an upper end 21a. The upper end 21a is disposed higher than the entirety of the handlebar 13.

The straddled vehicle 1 includes a seat 22. The seat 22 is supported by the vehicle body frame 4. The seat 22 is disposed behind the fuel tank 21. At least part of the seat 22 is disposed at the same height position as the fuel tank 21. The entirety of the seat 22 is disposed, for example, lower than the upper end 21a.

The straddled vehicle 1 includes an engine 23. The engine 23 is an internal combustion engine. The engine 23 is supported by the vehicle body frame 4. For example, the engine 23 is fixed to the vehicle body frame 4. The engine 23 does not swing with respect to the vehicle body frame 4. The engine 23 is disposed more rearward than the steering device 11. At least part of the engine 23 is disposed at the same height position as the front wheel 15. The engine 23 is disposed below the fuel tank 21. The engine 23 is disposed more forward than the seat 22. The engine 23 is disposed lower than the seat 22.

The straddled vehicle 1 includes a swing arm 24 and a rear wheel 25. The swing arm 24 is disposed more rearward than the engine 23. The swing arm 24 is disposed lower than the seat 22. The swing arm 24 is supported by the vehicle body frame 4. The swing arm 24 swings with respect to the vehicle body frame 4. The swing arm 24 extends rearward from the vehicle body frame 4. The rear wheel 25 is supported by a rear part of the swing arm 24. The rear wheel 25 is disposed lower than the seat 22.

The straddled vehicle 1 includes a power transmission mechanism (not illustrated). The power transmission mechanism couples the engine 23 and the rear wheel 25. The power transmission mechanism transmits power from the engine 23 to the rear wheel 25. The power transmission mechanism is, for example, a chain.

The vehicle body 3 includes a front cowl 5. The front cowl 5 is disposed at the front part of the straddled vehicle 1. The front cowl 5 is supported by the vehicle body frame 4. The front cowl 5 covers the steering device 11. The front cowl 5 is also referred to as a front cover.

The front cowl 5 includes a center cowl 6. The center cowl 6 is disposed in front of the handlebar 13. The center cowl 6 is disposed at the same height position as the handlebar 13.

The front cowl 5 includes a side cowl 7. The side cowl 7 is disposed below the center cowl 6. The side cowl 7 is disposed leftward of the front fork 12 and on rightward of the front fork 12. The side cowl 7 overlaps the front fork 12 in vehicle side view.

The straddled vehicle 1 includes a wing member 30. The wing member 30 generates a downforce. The downforce acts downward on the straddled vehicle 1.

The wing member 30 is disposed at a front part of the straddled vehicle 1. The wing member 30 is supported by the vehicle body 3. For example, the wing member 30 is supported by the front cowl 5. The wing member 30 is supported by the side cowl 7.

The wing member 30 is long in the longitudinal direction X.

The wing member 30 extends from a position more forward than the front fork 12 to a position more rearward than the front fork 12. The wing member 30 extends from a position more forward than the entirety of the front fork 12 to a position more rearward than the entirety of the front fork 12.

The wing member 30 extends from a position more forward than the front axle 14 to a position more rearward than the front axle 14. The wing member 30 extends from a position more forward than the entirety of the front axle 14 to a position more rearward than the entirety of the front axle 14.

The wing member 30 extends to a position more rearward than the front wheel 15. The wing member 30 extends to a position more rearward than the entirety of the front wheel 15.

The wing member 30 includes a support 40 and a wing 50. The wing 50 is supported by the support 40. The wing 50 extends more forward than the support 40. The wing 50 extends to a position more forward than the support 40. The wing 50 extends to a position more forward than the entirety of the support 40. The wing 50 generates a downforce.

At least part of the wing 50 is disposed more forward than the front fork 12. At least part of the wing 50 is disposed more forward than the entirety of the front fork 12.

At least part of the wing 50 is disposed more forward than the front axle 14. At least part of the wing 50 is disposed more forward than the entirety of the front axle 14.

The support 40 is supported by the vehicle body 3. The configuration of the support 40 will be exemplified.

The support 40 includes a first attachment portion 41. The first attachment portion 41 is attached to the vehicle body 3. For example, the first attachment portion 41 is attached to the front cowl 5. The first attachment portion 41 is attached to the side cowl 7. The first attachment portion 41 is joined to the wing 50.

The support 40 includes a second attachment portion 42. The second attachment portion 42 is disposed more rearward than the first attachment portion 41. The entirety of the second attachment portion 42 is disposed more rearward than the entirety of the first attachment portion 41. The second attachment portion 42 is attached to the vehicle body 3. For example, the second attachment portion 42 is attached to the front cowl 5. The second attachment portion 42 is attached to the side cowl 7.

The support 40 includes an arm 43. The arm 43 is joined to the second attachment portion 42. The arm 43 is joined to the wing 50. The arm 43 couples the second attachment portion 42 and the wing 50.

A driver grips the handlebar 13. The driver steers the steering device 11. The driver sits on the seat 22. For example, the driver sits astride the seat 22 and performs a knee grip. For example, the knee grip is to sandwich at least one of the vehicle body 3 and the fuel tank 21 between both legs of the driver.

Figs. 2 and 3 illustrate a vehicle center plane C. The vehicle center plane C is a virtual plane perpendicular to the transverse direction Y. The vehicle center plane C includes the center of the straddled vehicle 1 in the transverse direction Y.

Refer to FIG. 3. The front fork 12 includes a left front fork 12L and a right front fork 12R. The left front fork 12L is disposed leftward of the vehicle center plane C. The right front fork 12R is disposed rightward of the vehicle center plane C.

The front axle 14 extends in the transverse direction Y. The front axle 14 has a left end 14L and a right end 14R. The left end 14L is disposed leftward of the vehicle center plane C. The left end 14L is supported by the left front fork 12L. The right end 14R is disposed rightward of the vehicle center plane C. The right end 14R is supported by the right front fork 12R.

For example, the front wheel 15 is disposed on the vehicle center plane C. The front wheel 15 is disposed rightward of the left front fork 12L. The front wheel 15 is disposed rightward of the left end 14L. The front wheel 15 is disposed leftward of the right front fork 12R. The front wheel 15 is disposed leftward of the right end 14R.

For example, the front fender 16 is disposed on the vehicle center plane C. The front fender 16 is disposed rightward of the left front fork 12L. The front fender 16 is disposed leftward of the right front fork 12R.

The center cowl 6 is disposed on the vehicle center plane C. The center cowl 6 is disposed above the front fender 16.

The side cowl 7 includes a left side cowl 7L and a right side cowl 7R. The left side cowl 7L is disposed leftward of the vehicle center plane C. The right side cowl 7R is disposed rightward of the vehicle center plane C.

The left side cowl 7L is disposed leftward of the left front fork 12L. The right side cowl 7R is disposed rightward of the right front fork 12R. In short, the side cowl 7 is disposed more outward than the front fork 12 in the transverse direction Y. "Outward in the transverse direction Y" is a direction away from the vehicle center plane C.

The wing member 30 includes a left wing member 30L and a right wing member 30R. The left wing member 30L is disposed leftward of the vehicle center plane C. The entirety of the left wing member 30L is disposed leftward of the vehicle center plane C. The right wing member 30R is disposed rightward of the vehicle center plane C. The entirety of the right wing member 30R is disposed rightward of the vehicle center plane C.

The left wing member 30L is disposed more leftward than the left front fork 12L. The right wing member 30R is disposed more rightward than the right front fork 12R. In short, the wing member 30 is disposed more outward than the front fork 12 in the transverse direction Y.

This will be described in more detail. The entirety of the left wing member 30L is disposed more leftward than the entirety of the left front fork 12L. The entirety of the right wing member 30R is disposed more rightward than the entirety of the right front fork 12R. In short, the entirety of the wing member 30 is disposed more outward than the entirety of the front fork 12 in the transverse direction Y. The wing member 30 does not overlap the front fork 12 in vehicle front view.

The left wing member 30L is disposed more leftward than the left side cowl 7L. The right wing member 30R is disposed more rightward than the right side cowl 7R. In short, the wing member 30 is disposed more outward than the side cowl 7 in the transverse direction Y.

The left wing member 30L extends leftward from the left side cowl 7L. The right wing member 30R extends rightward from the right side cowl 7R. In short, the wing member 30 extends outward in the transverse direction Y from the side cowl 7.

The right wing member 30R has a shape symmetrical to the shape of the left wing member 30L with respect to the vehicle center plane C. The right wing member 30R has a structure common to the structure of the left wing member 30L.

Specifically, the left wing member 30L includes the support 40 and the wing 50 described above. The support 40 belonging to the left wing member 30L is supported by the left side cowl 7L. Both the first attachment portion 41 and the second attachment portion 42 belonging to the left wing member 30L are attached to the left side cowl 7L. The right wing member 30R also includes the support 40 and the wing 50 described above. The support 40 belonging to the right wing member 30R is supported by the right side cowl 7R. Both the first attachment portion 41 and the second attachment portion 42 belonging to the right wing member 30R are attached to the right side cowl 7R.

The straddled vehicle 1 includes a headlight 19. The headlight 19 is disposed below the center cowl 6. The headlight 19 is disposed above the front fender 16. The headlight 19 is disposed in front of the front fork 12.

The headlight 19 is disposed rightward of the left side cowl 7L. The headlight 19 is disposed leftward of the right side cowl 7R. In short, the headlight 19 is disposed more inward than the side cowl 7 in the transverse direction Y. "Inward in the transverse direction Y" is a direction approaching the vehicle center plane C.

The headlight 19 includes a left headlight 19L and a right headlight 19R. The left headlight 19L is disposed leftward of the vehicle center plane C. The right headlight 19R is disposed rightward of the vehicle center plane C.

### 2. Structure of wing member 30

The structure of the wing member 30 will be described.

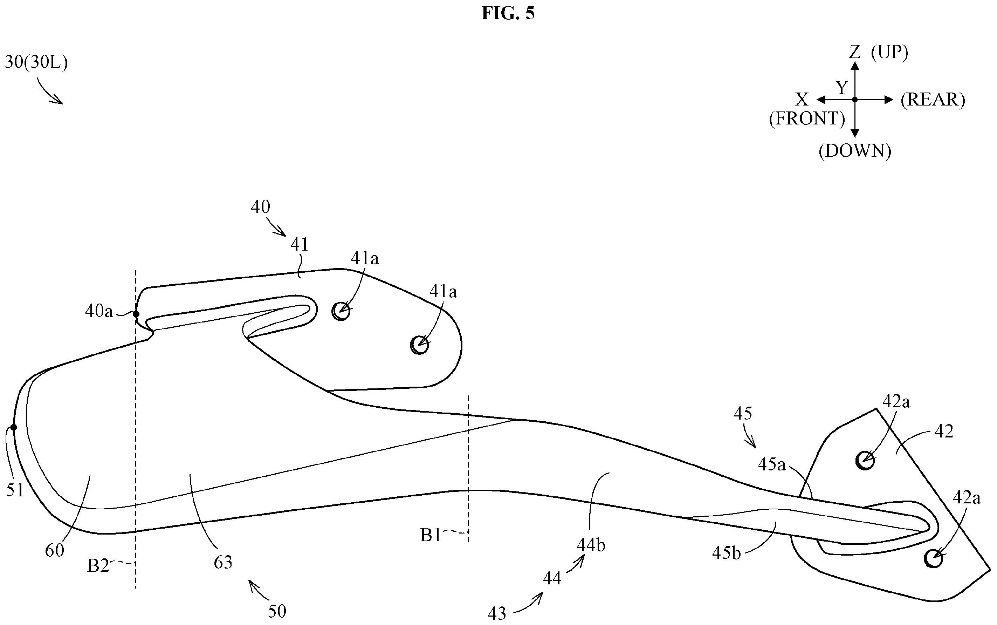

Fig. 5 is a side view of the left wing member 30L. Hereinafter, when the left wing member 30L and the right wing member 30R are not distinguished, they are appropriately referred to as "wing member 30".

The wing 50 is disposed more forward than the arm 43. At least part of the wing 50 is disposed more forward than the entirety of the arm 43. For example, the entirety of the wing 50 is disposed more forward than the entirety of the arm 43.

Fig. 5 shows a boundary plane B1. The boundary plane B1 is an example of a boundary between the wing 50 and the arm 43. The wing 50 is located in front of the boundary plane B1. The entirety of the wing 50 is located in front of the boundary plane B1. The arm 43 is located behind the boundary plane B1. The entirety of the arm 43 is located behind the boundary plane B1.

The number of wings 50 included in one wing member 30 is only one. The number of wings 50 included in one left wing member 30L is only one. The number of wings 50 included in one right wing member 30R is only one. The number of wings 50 supported by one support 40 is only one. The number of wings 50 supported by one first attachment portion 41 is only one. The number of wings 50 supported by one second attachment portion 42 is only one. One wing 50 supported by one second attachment portion 42 is the same as one wing 50 supported by one first attachment portion 41.

The arm 43 does not include a wing. The arm 43 generates no downforce. The arm 43 generates substantially no downforce.

One wing member 30 is inseparable into a plurality of parts. The left wing member 30L is inseparable into a plurality of parts. The right wing member 30R is also inseparable into a plurality of parts. For example, the support 40 and the wing 50 belonging to the left wing member 30L are integrally molded. The first attachment portion 41, the second attachment portion 42, the arm 43, and the wing 50 belonging to the left wing member 30L are integrally molded. The right wing member 30R is also molded in the same manner as the left wing member 31L.

The left wing member 30L and the right wing member 30R are separated from each other. The left wing member 30L and the right wing member 30R are not connected to each other.

The wing member 30 is made of, for example, synthetic resin.

The wing 50 extends to a position more forward than the entirety of the support 40. The wing 50 extends to a position more forward than the entirety of the first attachment portion 41. The wing 50 extends to a position more forward than the entirety of the second attachment portion 42. The wing 50 extends to a position more forward than the entirety of the arm 43.

The support 40 has a front end 40a. The front end 40a corresponds to the front end of the first attachment portion 41.

The wing 50 extends more forward than the front end 40a.

The wing 50 has a front end 51. The front end 51 is located more forward than the front end 40a. In other words, the front end 51 is located more forward than the entirety of the support 40. The front end 51 corresponds to the front end of the wing member 30.

The wing 50 includes a forward protrusion 60. The forward protrusion 60 is a portion of the wing 50 located more forward than the front end 40a. The entirety of the forward protrusion 60 is located more forward than the front end 40a. The entirety of the forward protrusion 60 is located more forward than the entirety of the support 40.

Fig. 5 illustrates a boundary plane B2 for convenience. The boundary plane B2 is an example of a boundary defining the forward protrusion 60. The forward protrusion 60 is located in front of the boundary plane B2. The entirety of the forward protrusion 60 is located in front of the boundary plane B2.

The forward protrusion 60 includes the front end 51. The front end 51 corresponds to the front end of the forward protrusion 60.

The wing 50 includes a rear part 63. The rear part 63 is a portion of the wing 50 located more rearward than the front end 40a. The entirety of the rear part 63 is located more rearward than the front end 40a. The rear part 63 is located behind the forward protrusion 60. The entirety of the rear part 63 is located more rearward than the entirety of the forward protrusion 60. The rear part 63 is located in front of the boundary plane B1 and behind the boundary plane B2. The entirety of the rear part 63 is located in front of the boundary plane B1 and behind the boundary plane B2.

The wing 50 extends from a position more forward than the front end 40a to a position more rearward than the front end 40a.

For example, the wing 50 includes a portion disposed more rearward than the first attachment portion 41. The wing 50 includes a portion disposed more rearward than the entirety of the first attachment portion 41. The wing 50 extends to a position more rearward than the first attachment portion 41. The wing 50 extends to a position more rearward than the entirety of the first attachment portion 41. The wing 50 extends from a position more forward than the entirety of the first attachment portion 41 to a position more rearward than the entirety of the first attachment portion 41.

The wing 50 is disposed more forward than the second attachment portion 42. At least part of the wing 50 is disposed more forward than the entirety of the second attachment portion 42. At least part of the second attachment portion 42 is disposed more rearward than the entirety of the wing 50. For example, the entirety of the wing 50 is disposed more forward than the entirety of the second attachment portion 42.

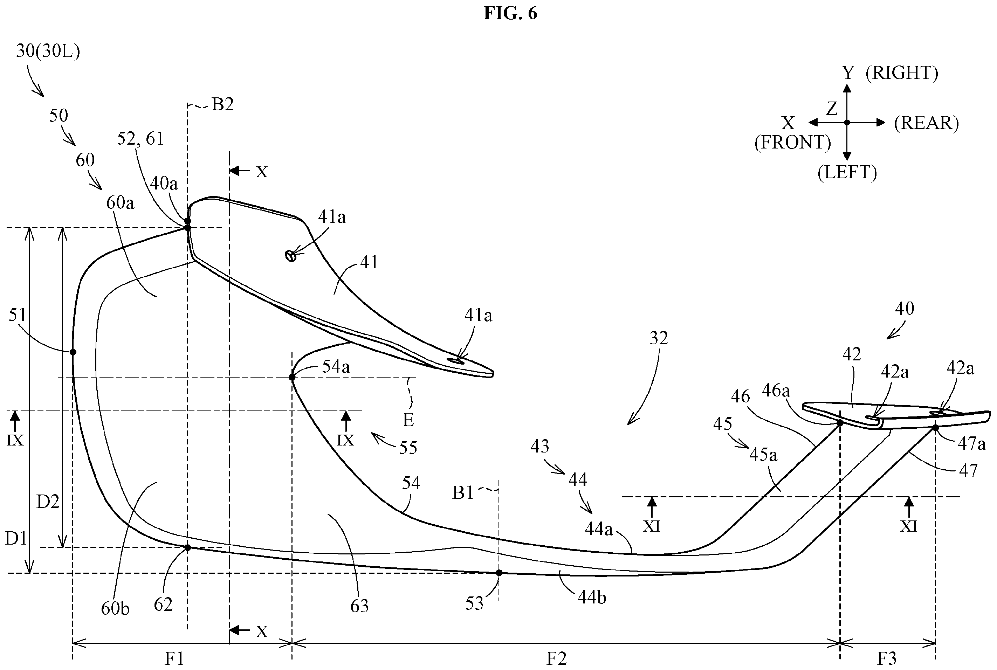

Fig. 6 is a plan view of the left wing member 30L. The wing 50 is disposed more outward than the first attachment portion 41 in the transverse direction Y. At least part of the wing 50 is disposed more outward than the entirety of the first attachment portion 41 in the transverse direction Y. At least part of the wing 50 is disposed more outward than the front end 40a in the transverse direction Y. The front end 51 is disposed more outward than the front end 40a in the transverse direction Y.

The forward protrusion 60 is disposed more outward than the first attachment portion 41 in the transverse direction Y. At least part of the forward protrusion 60 is disposed more outward than the entirety of the first attachment portion 41 in the transverse direction Y. At least part of the forward protrusion 60 is disposed more outward than the front end 40a in the transverse direction Y. For example, the entirety of the forward protrusion 60 is disposed more outward than the front end 40a in the transverse direction Y.

The wing 50 has a length D1 in the transverse direction Y. The length D1 is, for example, a distance in the transverse direction Y between an inner end 52 and an outer end 53. The inner end 52 is a portion of the wing 50 located innermost in the transverse direction Y. The outer end 53 is a portion of the wing 50 located outermost in the transverse direction Y.

The forward protrusion 60 has a length D2 in the transverse direction Y. The length D2 is, for example, a distance in the transverse direction Y between an inner end 61 and an outer end 62. The inner end 61 is a portion of the forward protrusion 60 located innermost in the transverse direction Y. The outer end 62 is a portion of the forward protrusion 60 located outermost in the transverse direction Y.

The inner end 61 is, for example, at the same position as the inner end 52. For example, the outer end 62 is disposed more inward than the outer end 53 in the transverse direction Y. For example, the outer end 62 is disposed more forward than the outer end 53 in the transverse direction Y.

The length D2 is sufficiently large.

The length D2 is 50% or more of the length D1.

For example, the length D2 is 60% or more of the length D1.

For example, the length D2 is 70% or more of the length D1.

For example, the length D2 is 80% or more of the length D1.

For example, the length D2 is 90% or more of the length D1.

For example, the length D2 is 100% or less of the length D1.

For example, the length D2 is less than 100% of the length D1.

The length D1 is an example of the first length of the present invention. The length D2 is an example of the second length of the present invention.

The wing 50 extends in the transverse direction Y. The wing 50 extends outward in the transverse direction Y from the first attachment portion 41. The wing 50 curves convexly forward in vehicle plan view. Specifically, the wing 50 extends outward in the transverse direction Y and forward, and then extends outward in the transverse direction Y and rearward. The wing 50 extends outward in the transverse direction Y and forward in the longitudinal direction X, and then extends outward in the transverse direction Y and rearward in the longitudinal direction X.

The wing 50 has a trailing edge 54 in vehicle plan view. The trailing edge 54 is also referred to as a "rear edge 54." At least part of the trailing edge 54 is disposed more rearward than the front end 40a. For example, the entirety of the trailing edge 54 is disposed more rearward than the front end 40a.

At least part of the trailing edge 54 is disposed more outward than the front end 40a in the transverse direction Y. For example, the entirety of the trailing edge 54 is disposed more outward than the front end 40a in the transverse direction Y.

The trailing edge 54 extends in the transverse direction Y. The trailing edge 54 extends outward in the transverse direction Y from the first attachment portion 41. The trailing edge 54 includes a curved portion 55. The curved portion 55 curves convexly forward in vehicle plan view. Specifically, the curved portion 55 extends outward in the transverse direction Y and forward, and then extends outward in the transverse direction Y and rearward. The curved portion 55 extends outward in the transverse direction Y and forward in the longitudinal direction X, and then extends outward in the transverse direction Y and rearward in the longitudinal direction X.

The trailing edge 54 has a front end 54a. The front end 54a is included in the curved portion 55.

The front end 54a is disposed more rearward than the front end 40a.

The front end 54a is disposed more outward than the first attachment portion 41 in the transverse direction Y. The front end 54a is disposed more outward than at least part of the first attachment portion 41 in the transverse direction Y. The front end 54a is disposed more outward than the front end 40a in the transverse direction Y.

The front end 54a is disposed more inward than the second attachment portion 42 in the transverse direction Y. The front end 54a is disposed more inward than at least part of the second attachment portion 42 in the transverse direction Y.

The front end 54a is disposed more inward than the arm 43 in the transverse direction Y. The front end 54a is disposed more inward than at least part of the arm 43 in the transverse direction Y.

At least part of the forward protrusion 60 is disposed more outward than the front end 54a in the transverse direction Y.

For example, the forward protrusion 60 includes a first forward protrusion 60a and a second forward protrusion 60b. The first forward protrusion 60a is disposed more inward than the front end 54a in the transverse direction Y. The entirety of the first forward protrusion 60a is disposed more inward than the front end 54a in the transverse direction Y. The second forward protrusion 60b is disposed more outward than the front end 54a in the transverse direction Y. The entirety of the second forward protrusion 60b is disposed more outward than the front end 54a in the transverse direction Y.

Fig. 6 illustrates a first plane E. The first plane is a virtual plane. The first plane E includes the front end 54a. The first plane E is perpendicular to the transverse direction Y. The first plane E intersects with the forward protrusion 60. The first plane E is an example of a boundary between the first forward protrusion 60a and the second forward protrusion 60b. The first forward protrusion 60a is located more inward than the first plane E in the transverse direction Y. The entirety of the first forward protrusion 60a is located more inward than the first plane E in the transverse direction Y. The second forward protrusion 60b is located more outward than the first plane E in the transverse direction Y. The entirety of the second forward protrusion 60b is located more outward than the first plane E in the transverse direction Y.

The front end 51 is disposed more inward than the front end 54a in the transverse direction Y. The front end 51 is included in the first forward protrusion 60a.

The first attachment portion 41 has a shape that can be brought into surface contact with the side cowl 7. The shape of the first attachment portion 41 matches the shape of the side cowl 7. For example, the shape of the first attachment portion 41 is curved. The first attachment portion 41 extends in the longitudinal direction X. The first attachment portion 41 extends from a position more forward than the front end 54a to a position more rearward than the front end 54a. The first attachment portion 41 is longer than the forward protrusion 60 in the longitudinal direction X. The first attachment portion 41 is shorter than the wing 50 in the longitudinal direction X. Further, the first attachment portion 41 has one or more through-holes 41a.

At least one of the through-holes 41a extends in the horizontal direction. At least one of the through-holes 41a extends substantially in the horizontal direction. At least one of the through-holes 41a extends in the transverse direction Y. At least one of the through-holes 41a extends substantially in the transverse direction Y.

The second attachment portion 42 has a shape that can be brought into surface contact with the side cowl 7. The shape of the second attachment portion 42 matches the shape of the side cowl 7. For example, the shape of the second attachment portion 42 is curved. The second attachment portion 42 extends in the longitudinal direction X. The second attachment portion 42 is shorter than the first attachment portion 41 in the longitudinal direction X. Further, the second attachment portion 42 has one or more through-holes 42a.

At least part of the second attachment portion 42 is disposed more rearward than the entirety of the first attachment portion 41. For example, the entirety of the second attachment portion 42 is disposed more rearward than the entirety of the first attachment portion 41.

At least part of the second attachment portion 42 is disposed more outward than the entirety of the first attachment portion 41 in the transverse direction Y. For example, the entirety of the second attachment portion 42 is disposed more outward than the entirety of the first attachment portion 41 in the transverse direction Y.

At least part of the second attachment portion 42 is disposed more rearward than the entirety of the arm 43.

At least part of the second attachment portion 42 is disposed more inward than the entirety of the arm 43 in the transverse direction Y.

The arm 43 is disposed more rearward than the first attachment portion 41. At least part of the arm 43 is disposed more rearward than the entirety of the first attachment portion 41. For example, the entirety of the arm 43 is disposed more rearward than the entirety of the first attachment portion 41.

The arm 43 is disposed more outward than the first attachment portion 41 in the transverse direction Y. At least part of the arm 43 is disposed more outward than the entirety of the first attachment portion 41 in the transverse direction Y. For example, the entirety of the arm 43 is disposed more outward than the entirety of the first attachment portion 41 in the transverse direction Y.

The arm 43 is disposed more forward than the second attachment portion 42. At least part of the arm 43 is disposed more forward than the entirety of the second attachment portion 42.

The arm 43 is disposed more outward than the second attachment portion 42 in the transverse direction Y. At least part of the arm 43 is disposed more outward than the entirety of the second attachment portion 42 in the transverse direction Y.

The arm 43 extends forward from the second attachment portion 42. The arm 43 extends outward in the transverse direction Y from the second attachment portion 42.

The arm 43 includes a first arm 44. The first arm 44 is joined to the wing 50.

The first arm 44 extends in the longitudinal direction X. The first arm 44 extends in the longitudinal direction X in vehicle plan view. The first arm 44 extends rearward from the wing 50. For example, the first arm 44 is slightly inclined downward toward the rear.

The first arm 44 has a plate shape. The first arm 44 has a plate shape substantially parallel to the longitudinal direction X.

The first arm 44 has a flat plate shape. The first arm 44 has a flat plate shape perpendicular to the transverse direction Y. The length of the first arm 44 in the longitudinal direction X is longer than the length of the first arm 44 in the up-down direction Z. The length of the first arm 44 in the transverse direction Y is shorter than the length of the first arm 44 in the up-down direction Z.

The first arm 44 has an inner surface 44a and an outer surface 44b. The inner surface 44a is substantially parallel to the longitudinal direction X. The outer surface 44b is substantially parallel to the longitudinal direction X. The outer surface 44b is substantially parallel to the inner surface 44a.

The inner surface 44a is substantially parallel to the transverse direction Y. The outer surface 44b is substantially perpendicular to the transverse direction Y.

The arm 43 includes a second arm 45. The second arm 45 is joined to the first arm 44. The second arm 45 is joined to the rear part of the first arm 44. The second arm 45 is joined to the second attachment portion 42. The second arm 45 extends from the first arm 44 to the second attachment portion 42.

The second arm 45 extends in the transverse direction Y. The second arm 45 extends in the transverse direction Y in vehicle plan view. The second arm 45 extends inward in the transverse direction Y from the first arm 44. The second arm 45 extends inward in the transverse direction Y and rearward from the first arm 44. The second arm 45 extends inward in the transverse direction Y and rearward in the longitudinal direction X from the first arm 44.

The second arm 45 is disposed more rearward than the first arm 44. At least part of the second arm 45 is disposed more rearward than the entirety of the first arm 44. For example, the entirety of the second arm 45 is disposed more rearward than the entirety of the first arm 44.

The second arm 45 is disposed more inward than the first arm 44 in the transverse direction Y. At least part of the second arm 45 is disposed more inward than the entirety of the first arm 44 in the transverse direction Y. For example, the entirety of the second arm 45 is disposed more inward than the entirety of the first arm 44 in the transverse direction Y.

The second arm 45 is disposed more forward than the second attachment portion 42. At least part of the second arm 45 is disposed more forward than the entirety of the second attachment portion 42.

The second arm 45 is disposed more outward than the second attachment portion 42 in the transverse direction Y. At least part of the second arm 45 is disposed more outward than the entirety of the second attachment portion 42 in the transverse direction Y.

The first arm 44 is disposed more forward than the second attachment portion 42. At least part of the first arm 44 is disposed more forward than the entirety of the second attachment portion 42. For example, the entirety of the first arm 44 is disposed more forward than the entirety of the second attachment portion 42.

The first arm 44 is disposed more outward than the second attachment portion 42 in the transverse direction Y. At least part of the first arm 44 is disposed more outward than the entirety of the second attachment portion 42 in the transverse direction Y. For example, the entirety of the first arm 44 is disposed more outward than the entirety of the second attachment portion 42 in the transverse direction Y.

The second arm 45 has a plate shape. The second arm 45 has a plate shape substantially parallel to the longitudinal direction X.

The second arm 45 has a flat plate shape. The second arm 45 has a flat plate shape perpendicular to the up-down direction Z. The length of the second arm 45 in the longitudinal direction X is longer than the length of the second arm 45 in the up-down direction Z. The length of the second arm 45 in the transverse direction Y is longer than the length of the second arm 45 in the up-down direction Z. The length of the second arm 45 in the transverse direction Y is longer than the length of the second arm 45 in the longitudinal direction X.

The second arm 45 has an upper surface 45a. The upper surface 45a is substantially parallel to the longitudinal direction X. The upper surface 45a is substantially perpendicular to the up-down direction Z.

Refer to Fig. 5. The second arm 45 has a lower surface 45b. The lower surface 45b is substantially parallel to the longitudinal direction X. The lower surface 45b is substantially perpendicular to the up-down direction Z. The lower surface 45b is substantially parallel to the upper surface 45a.

Refer to Fig. 6. The second arm 45 is disposed more rearward than the wing 50. For example, the entirety of the second arm 45 is disposed more rearward than the entirety of the wing 50. For example, the second arm 45 does not overlap the wing 50 in vehicle plan view.

The second arm 45 has a leading edge 46 in vehicle plan view. The leading edge 46 is also referred to as a "front edge 46." The leading edge 46 is disposed more rearward than the trailing edge 54. The entirety of the leading edge 46 is disposed more rearward than the entirety of the trailing edge 54. The leading edge 46 does not overlap the trailing edge 54 in vehicle plan view.

The leading edge 46 extends in the transverse direction Y. The leading edge 46 extends inward in the transverse direction Y and rearward. The leading edge 46 extends inward in the transverse direction Y and rearward in the longitudinal direction X. The leading edge 46 has a rear end 46a.

The second arm 45 has a trailing edge 47. The trailing edge 47 is also referred to as a "rear edge 47." The trailing edge 47 is disposed more rearward than the leading edge 46.

The trailing edge 47 extends in the transverse direction Y. The trailing edge 47 extends inward in the transverse direction Y and rearward. The trailing edge 47 extends inward in the transverse direction Y and rearward in the longitudinal direction X. The trailing edge 47 is substantially parallel to the leading edge 46. The trailing edge 47 has a rear end 47a.

The second attachment portion 42 extends from a position more forward than the rear end 46a to a position more rearward than the rear end 47a.

The wing member 30 forms a space 32. The space 32 is an unoccupied space. The wing member 30 does not include a portion existing in the space 32. The space 32 is located more rearward than the wing 50, more inward than the first arm 44 in the transverse direction Y, and more forward than the second arm 45. The space 32 is disposed more outward than the vehicle body 3 in the transverse direction Y. For example, the space 32 is disposed more outward than the side cowl 7 in the transverse direction Y.

The space 32 is long in the longitudinal direction X.

The wing 50 has a length F1 in the longitudinal direction X. The length F1 is, for example, a distance between the front end 51 and the front end 54a in the longitudinal direction X.

The space 32 has a length F2 in the longitudinal direction X. The length F2 is, for example, a distance in the longitudinal direction X between the front end 54a and the rear end 46a.

The length F2 is longer than the length F1. For example, the length F2 is longer than twice the length F1.

The second arm 45 has a length F3 in the longitudinal direction X. The length F3 is, for example, a distance in the longitudinal direction X between the rear end 46a and the rear end 47a.

The length F2 is longer than the length F3. For example, the length F2 is longer than four times the length F3.

The length F1 is longer than the length F3. For example, the length F1 is longer than twice the length F3.

The length F1 is shorter than the length of the first attachment portion 41 in the longitudinal direction X. The length F1 is shorter than the length of the wing 50 in the longitudinal direction X. Length F1 is longer than the length of forward protrusion 60 in the longitudinal direction X.

The length F2 is longer than the length of the first attachment portion 41 in the longitudinal direction X. The length F2 is longer than the length of the second attachment portion 42 in the longitudinal direction X. The length F2 is longer than the length of the wing 50 in the longitudinal direction X. The length F2 is longer than the length of forward protrusion 60 in the longitudinal direction X.

The length F3 is shorter than the length of the second attachment portion 42 in the longitudinal direction X.

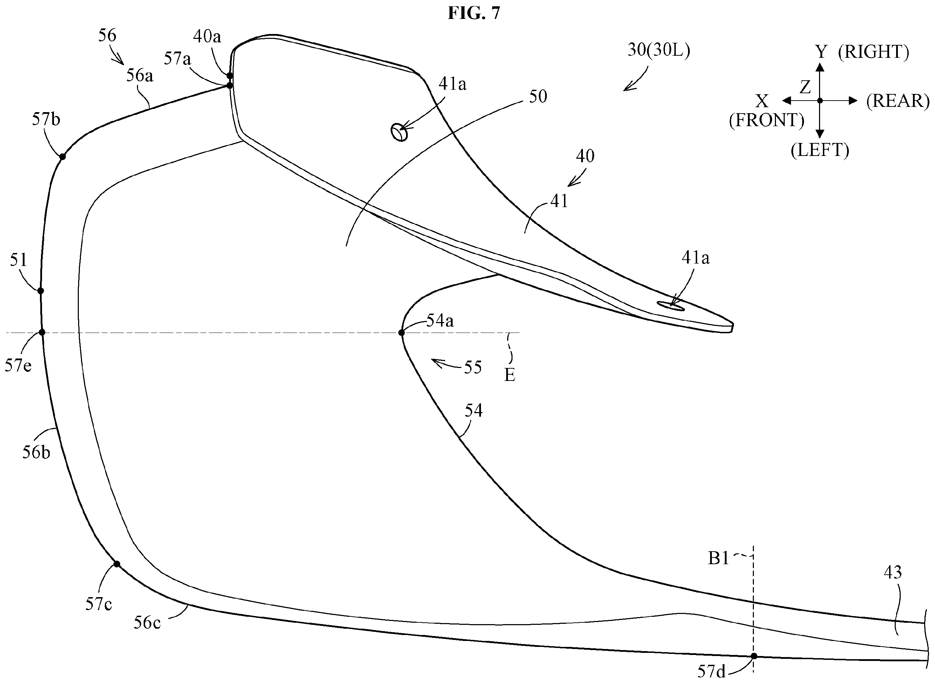

Fig. 7 is a plan view of a part of the left wing member 30L. The wing 50 has a leading edge 56 in vehicle plan view. The leading edge 56 is also referred to as a "front edge 56." At least part of the leading edge 56 is disposed more forward than the front end 40a.

At least part of the leading edge 56 is disposed more outward than the front end 40a in the transverse direction Y. For example, the entirety of the leading edge 56 is disposed more outward than the front end 40a in the transverse direction Y.

The leading edge 56 extends in the transverse direction Y. The leading edge 56 extends outward in the transverse direction Y from the first attachment portion 41. The leading edge 56 curves convexly forward in vehicle plan view.

The leading edge 56 includes a first leading edge portion 56a. For example, the first leading edge portion 56a is the portion of the leading edge 56 from a point 57a to a point 57b. The points 57a and 57b are each located on the leading edge 56.

The first leading edge portion 56a extends forward from the first attachment portion 41. The point 57b is disposed more forward than the point 57a.

For example, the first leading edge portion 56a extends forward and outward in the transverse direction Y from the first attachment portion 41. The first leading edge portion 56a extends forward in the longitudinal direction X and outward in the transverse direction Y from the first attachment portion 41. For example, the point 57b is disposed more forward and outward in the transverse direction Y than the point 57a. The point 57b is disposed more forward in the longitudinal direction X and more outward in the transverse direction Y than the point 57a.

At least part of the first leading edge portion 56a is disposed more forward than the front end 40a. The point 57b is disposed more forward than the front end 40a.

For example, the entirety of the first leading edge portion 56a is disposed more forward than the front end 40a. For example, the point 57a is disposed more forward than the front end 40a.

For example, at least part of the first leading edge portion 56a is disposed more outward than the front end 40a in the transverse direction Y. For example, the point 57b is disposed more outward than the front end 40a in the transverse direction Y.

For example, the entirety of the first leading edge portion 56a is disposed more outward than the front end 40a in the transverse direction Y. For example, the point 57a is disposed more outward than the front end 40a in the transverse direction Y.

The leading edge 56 includes a second leading edge portion 56b. For example, the second leading edge portion 56b is the portion of the leading edge 56 from the point 57b to a point 57c. The point 57c is located on the leading edge 56.

The second leading edge portion 56b extends outward in the transverse direction Y from the first leading edge portion 56a. The point 57c is disposed more outward than the point 57b in the transverse direction Y.

The second leading edge portion 56b is disposed more outward than the first leading edge portion 56a in the transverse direction Y. For example, the entirety of the second leading edge portion 56b is disposed more outward than the entirety of the first leading edge portion 56a in the transverse direction Y.

For example, at least part of the second leading edge portion 56b is disposed more outward than the front end 40a in the transverse direction Y. For example, the entirety of the second leading edge portion 56b is disposed more outward than the front end 40a in the transverse direction Y. For example, the point 57c is disposed more outward than the front end 40a in the transverse direction Y.

The second leading edge portion 56b is disposed more forward than the front end 40a. For example, the entirety of the second leading edge portion 56b is disposed more forward than the front end 40a. For example, the point 57c is disposed more forward than the front end 40a.

The second leading edge portion 56b includes the front end 51.

The leading edge 56 includes a third leading edge portion 56c. For example, the third leading edge portion 56c is the portion of the leading edge 56 from the point 57c to a point 57d. The point 57d is located on the leading edge 56.

The third leading edge portion 56c extends outward in the transverse direction Y from the second leading edge portion 56b. The point 57d is disposed more outward than the point 57c in the transverse direction Y.

The third leading edge portion 56c is disposed more outward than the second leading edge portion 56b in the transverse direction Y. For example, the entirety of the third leading edge portion 56c is disposed more outward than the entirety of the second leading edge portion 56b in the transverse direction Y.

For example, at least part of the third leading edge portion 56c is disposed more outward than the front end 40a in the transverse direction Y. For example, the entirety of the third leading edge portion 56c is disposed more outward than the front end 40a in the transverse direction Y. For example, the point 57d is disposed more outward than the front end 40a in the transverse direction Y.

At least part of the third leading edge portion 56c is disposed more forward than the front end 40a.

The third leading edge portion 56c extends rearward from the second leading edge portion 56b. The point 57d is disposed more rearward than the point 57c.

For example, the third leading edge portion 56c extends to a position more rearward than the front end 40a. For example, the third leading edge portion 56c extends from a position more forward than the front end 40a to a position more rearward than the front end 40a. For example, the point 57d is disposed more rearward than the front end 40a.

A point 57e is an intersection point between the leading edge 56 and the first plane E. The point 57e is disposed more forward than the front end 40a.

At least part of the first leading edge portion 56a is disposed more inward than the front end 54a in the transverse direction Y. For example, the entirety of the first leading edge portion 56a is disposed more inward than the front end 54a in the transverse direction Y. For example, the point 57a is disposed more inward than the first plane E in the transverse direction Y. For example, the point 57b is disposed more inward than the first plane E in the transverse direction Y.

At least part of the second leading edge portion 56b is disposed more outward than the front end 54a in the transverse direction Y. For example, the second leading edge portion 56b includes a portion disposed more outward than the front end 54a in the transverse direction Y and a portion disposed more inward than the front end 54a in the transverse direction Y. For example, the first plane E intersects the second leading edge portion 56b. For example, the point 57b is disposed more inward than the first plane E in the transverse direction Y. For example, the point 57c is disposed more outward than the first plane E in the transverse direction Y. For example, the point 57e is located on the second leading edge portion 56b.

The entirety of the third leading edge portion 56c is disposed more outward than the front end 54a in the transverse direction Y. The point 57c is disposed more outward than the first plane E in the transverse direction Y. The point 57d is also disposed more outward than the first plane E in the transverse direction Y.

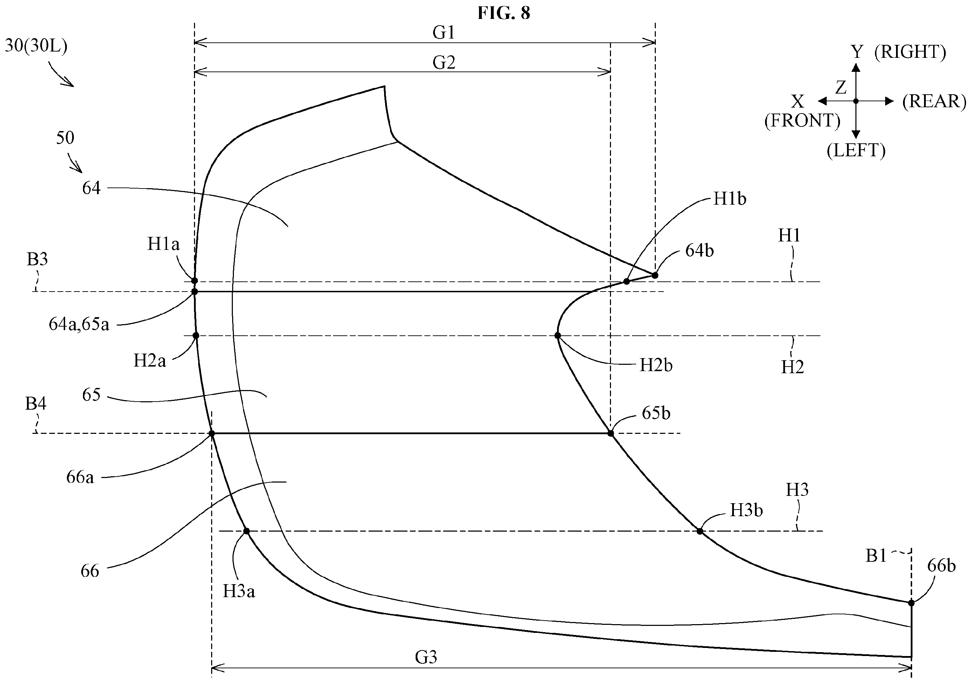

Fig. 8 is a plan view of a part of the left wing member 30L. The wing 50 will be described from another point of view.

The wing 50 includes a proximal portion 64, an intermediate portion 65, and a distal portion 66. The intermediate portion 65 is located more outward than the proximal portion 64 in the transverse direction Y. The distal portion 66 is located more outward than the intermediate portion 65 in the transverse direction Y. The intermediate portion 65 is disposed between the proximal portion 64 and the distal portion 66 in the transverse direction Y.

The wing 50 is constricted at the intermediate portion 65 in vehicle plan view. The intermediate portion 65 is narrower than the proximal portion 64 in the longitudinal direction X and is narrower than the distal portion 66 in the longitudinal direction X. The proximal portion 64 is long. The proximal portion 64 is long in the longitudinal direction X. The proximal portion 64 is longer than the intermediate portion 65 in the longitudinal direction X. The distal portion 66 is long. The distal portion 66 is long in the longitudinal direction X. The distal portion 66 is longer than the intermediate portion 65 in the longitudinal direction X. The intermediate portion 65 is short. The intermediate portion 65 is short in the longitudinal direction X. The intermediate portion 65 is shorter than the proximal portion 64 in the longitudinal direction X. The intermediate portion 65 is shorter than the distal portion 66 in the longitudinal direction X.

The proximal portion 64, the intermediate portion 65, and the distal portion 66 will be described in detail.

The proximal portion 64 is joined to the first attachment portion 41. The proximal portion 64 is disposed more outward than the first attachment portion 41 in the transverse direction Y. At least part of the proximal portion 64 is disposed more outward than the entirety of the first attachment portion 41 in the transverse direction Y. The proximal portion 64 is disposed more forward than the first attachment portion 41. At least part of the proximal portion 64 is disposed more forward than the entirety of the first attachment portion 41.

The intermediate portion 65 is joined to the proximal portion 64. The intermediate portion 65 is joined to the distal portion 66.

The distal portion 66 is joined to the arm 43.

Fig. 8 illustrates boundary surfaces B3 and B4 for convenience. The boundary plane B3 is an example of a boundary between the proximal portion 64 and the intermediate portion 65. The boundary plane B4 is an example of a boundary between the intermediate portion 65 and the distal portion 66. The boundary plane B4 is located more outward than the boundary plane B3 in the transverse direction Y. The proximal portion 64 is located more inward than the boundary plane B3 in the transverse direction Y. The entirety of the proximal portion 64 is located more inward than the boundary plane B3 in the transverse direction Y. The intermediate portion 65 is located more outward than the boundary plane B3 in the transverse direction Y and more inward than the boundary plane B4 in the transverse direction Y. The entirety of the intermediate portion 65 is located more outward than the boundary plane B3 in the transverse direction Y and more inward than the boundary plane B4 in the transverse direction Y. The distal portion 66 is located more outward than the boundary plane B4 in the transverse direction Y. The entirety of the distal portion 66 is located more outward than the boundary plane B4 in the transverse direction Y.

The boundary plane B3 is perpendicular to the transverse direction Y. The entirety of the intermediate portion 65 is located more outward than the entirety of the proximal portion 64 in the transverse direction Y.

The boundary plane B4 is perpendicular to the transverse direction Y. The entirety of the distal portion 66 is located more outward than the entirety of the intermediate portion 65 in the transverse direction Y.

The proximal portion 64 has a length G1 in the longitudinal direction X. The intermediate portion 65 has a length G2 in the longitudinal direction X. The distal portion 66 has a length G3 in the longitudinal direction X. The length G2 is shorter than the length G1. The length G2 is shorter than the length G3.

An example of definitions of the length G1, the length G2, and the length G3 will be described. The length G1 is, for example, a distance in the longitudinal direction X between a front end 64a of the proximal portion 64 and a rear end 64b of the proximal portion 64. The length G2 is, for example, a distance in the longitudinal direction X between a front end 65a of the intermediate portion 65 and a rear end 65b of the intermediate portion 65. The length G3 is, for example, a distance in the longitudinal direction X between a front end 66a of the distal portion 66 and a rear end 66b of the distal portion 66.

Another example of definitions of the length G1, the length G2, and the length G3 will be described. The length G1 is, for example, the length of the proximal portion 64 on a virtual plane H1. The virtual plane H1 passes through the proximal portion 64 and is perpendicular to the transverse direction Y. The length G1 is, for example, a distance in the longitudinal direction X between the point H1a and the point H1b. The point H1a is the front end of the cross section of the proximal portion 64 on the virtual plane H1. The point H1b is the rear end of the cross section of the proximal portion 64 on the virtual plane H1. The length G2 is, for example, the length of the intermediate portion 65 on a virtual plane H2. The virtual plane H2 passes through the intermediate portion 65 and is perpendicular to the transverse direction Y. The length G2 is, for example, a distance in the longitudinal direction X between the point H2a and the point H2b. The point H2a is the front end of the cross section of the intermediate portion 65 on the virtual plane H2. The point H2b is the rear end of the cross section of the intermediate portion 65 on the virtual plane H2. The length G3 is, for example, the length of the distal portion 66 on a virtual plane H3. The virtual plane H3 passes through the distal portion 66 and is perpendicular to the transverse direction Y. The length G3 is, for example, a distance in the longitudinal direction X between the point H3a and the point H3b. The point H3a is the front end of the cross section of the distal portion 66 on the virtual plane H3. The point H3b is the rear end of the cross section of the distal portion 66 on the virtual plane H3.

The length G1 is an example of the third length of the present invention. The length G2 is an example of the fourth length of the present invention. The length G3 is an example of the fifth length of the present invention.

The wing 50 extends in the longitudinal direction X. The wing 50 is inclined upward toward the rear.

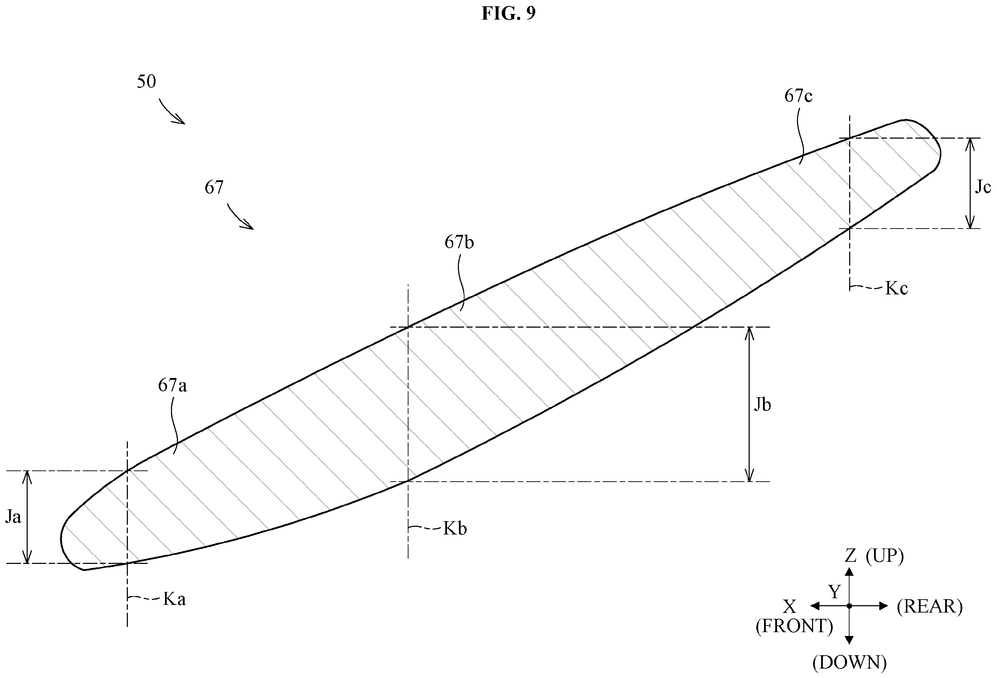

Fig. 9 is a cross-sectional view taken along line IX-IX of Fig. 6. The wing 50 has a cross section 67. The cross section 67 is perpendicular to the transverse direction Y. The cross section 67 extends rearward and upward.

The wing 50 has a wing cross-sectional shape.

Specifically, the cross section 67 has a front cross-sectional portion 67a, a central cross-sectional portion 67b, and a rear cross-sectional portion 67c. The central cross-sectional portion 67b is located behind the front cross-sectional portion 67a. The entirety of the central cross-sectional portion 67b is located more rearward than the entirety of the front cross-sectional portion 67a. The rear cross-sectional portion 67c is located behind the central cross-sectional portion 67b. The entirety of the rear cross-sectional portion 67c is located more rearward than the entirety of the central cross-sectional portion 67b. The front cross-sectional portion 67a has a thickness Ja. The central cross-sectional portion 67b has a thickness Jb. The rear cross-sectional portion 67c has a thickness Jc. The thickness Jb is larger than the thickness Ja. The thickness Jb is larger than the thickness Jc.

Here, the thickness Ja is the length of the front cross-sectional portion 67a on a virtual straight line Ka. The virtual straight line Ka is included in the front cross-sectional portion 67a and is parallel to the up-down direction Z. The thickness Jb is the length of the central cross-sectional portion 67b on a virtual straight line Kb. The virtual straight line Kb is included in the central cross-sectional portion 67b and is parallel to the up-down direction Z. The thickness Jc is the length of the rear cross-sectional portion 67c on a virtual straight line Kc. The virtual straight line Kc is included in the rear cross-sectional portion 67c and is parallel to the up-down direction Z.

The wing 50 extends in the transverse direction Y. The wing 50 is inclined downward toward the outside in the transverse direction Y. The wing 50 is slightly bent toward the outside in the transverse direction Y.

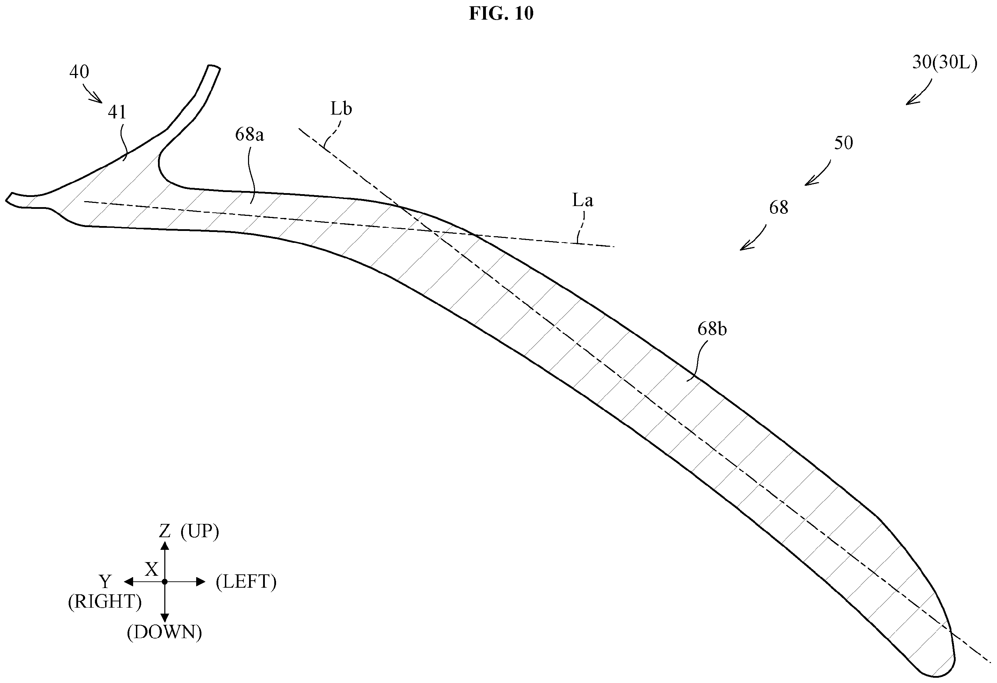

Fig. 10 is a cross-sectional view taken along line X-X illustrated in Fig. 6. The wing 50 has a cross section 68. The cross section 68 is perpendicular to the longitudinal direction X. The cross section 68 extends outward in the transverse direction Y and downward.

The cross section 68 is slightly bent.

Specifically, the cross section 68 has an inner cross-sectional portion 68a and an outer cross-sectional portion 68b. The inner cross-sectional portion 68a is joined to the first attachment portion 41. The inner cross-sectional portion 68a is disposed more outward than the first attachment portion 41 in the transverse direction Y. At least part of the inner cross-sectional portion 68a is disposed more outward than the entirety of the first attachment portion 41 in the transverse direction Y. The inner cross-sectional portion 68a extends outward in the transverse direction Y from the first attachment portion 41. The outer cross-sectional portion 68b is joined to the inner cross-sectional portion 68a. The outer cross-sectional portion 68b is located more outward than the inner cross-sectional portion 68a in the transverse direction Y. At least part of the outer cross-sectional portion 68b is located more outward than the entirety of the inner cross-sectional portion 68a in the transverse direction Y. The outer cross-sectional portion 68b extends outward in the transverse direction Y from the inner cross-sectional portion 68a.

The cross section 68 is bent between the inner cross-sectional portion 68a and the outer cross-sectional portion 68b.

The inner cross-sectional portion 68a extends in the horizontal direction. The inner cross-sectional portion 68a extends substantially in the horizontal direction. The inner cross-sectional portion 68a extends in the transverse direction Y. The inner cross-sectional portion 68a extends substantially in the transverse direction Y.

The outer cross-sectional portion 68b extends downward. The outer cross-sectional portion 68b is inclined downward toward the outside in the transverse direction Y.

The inner cross-sectional portion 68a extends in a direction La. The outer cross-sectional portion 68b extends in a direction Lb. The direction La is substantially horizontal. The direction La is closer to horizontal than the direction Lb. The angle between the direction La and the transverse direction Y is smaller than the angle between the direction Lb and the transverse direction Y.

The second arm 45 extends in the longitudinal direction X. The second arm 45 extends horizontally rearward.

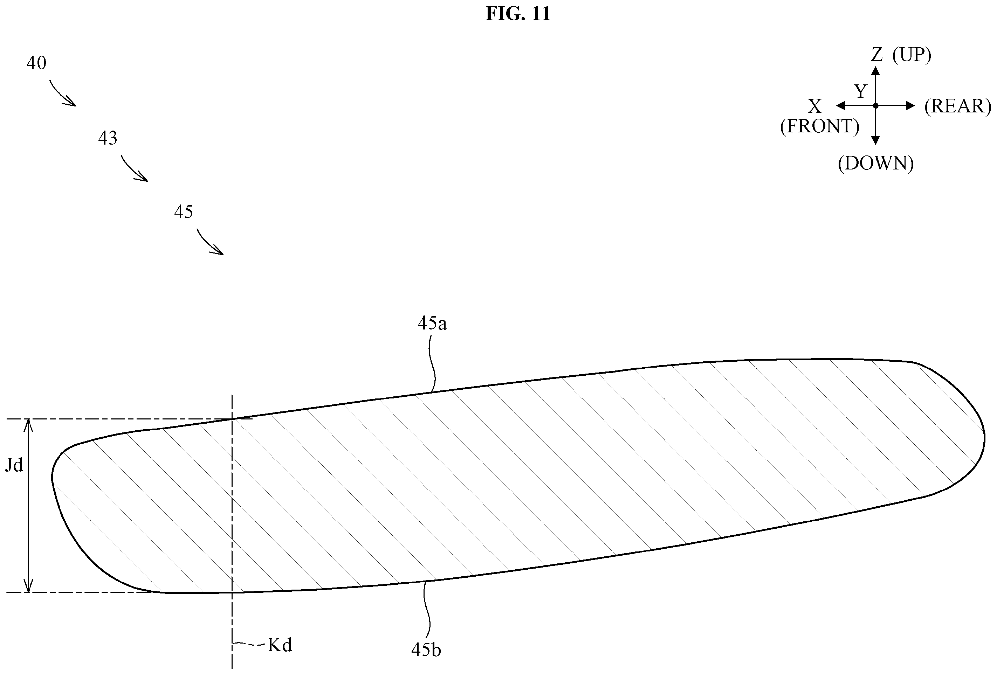

Fig. 11 is a cross-sectional view taken along line XI-XI of Fig. 6. The second arm 45 extends in the longitudinal direction X in a cross section perpendicular to the transverse direction Y. The second arm 45 is substantially horizontal in a cross section perpendicular to the transverse direction Y.

The upper surface 45a extends in the longitudinal direction X. The upper surface 45a is substantially horizontal.

The lower surface 45b extends in the longitudinal direction X. The lower surface 45b is substantially horizontal.

The lower surface 45b is substantially parallel to the upper surface 45a.

The second arm 45 has a thickness Jd. The thickness Jd is substantially constant in the longitudinal direction X. The thickness Jd does not substantially change in the longitudinal direction X.

The thickness Jd is, for example, the length of the second arm 45 on a virtual straight line Kd. The virtual straight line Kd is included in the second arm 45 and is parallel to the up-down direction Z. The virtual straight line Kd passes through the second arm 45 and is parallel to the up-down direction Z.

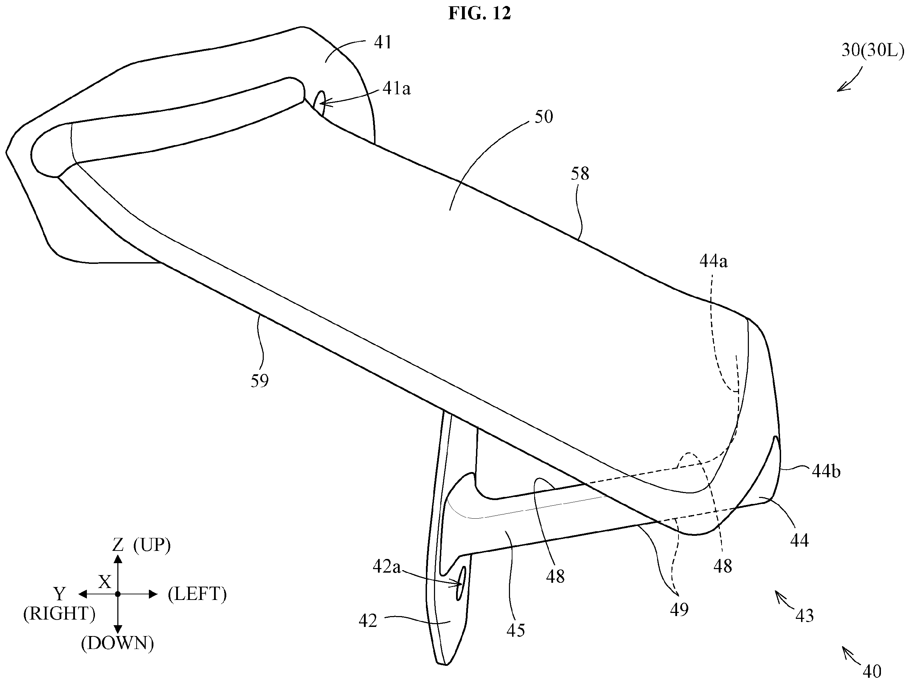

Fig. 12 is a front view of the left wing member 30L.

At least part of the first attachment portion 41 is disposed higher than the entirety of the wing 50.

At least part of the first attachment portion 41 is disposed higher than the entirety of the second attachment portion 42. For example, the entirety of the first attachment portion 41 is disposed higher than the entirety of the second attachment portion 42.

At least part of the first attachment portion 41 is disposed higher than the entirety of the arm 43. For example, the entirety of the first attachment portion 41 is disposed higher than the entirety of the arm 43.

At least part of the wing 50 is disposed lower than the entirety of the first attachment portion 41.

At least part of the wing 50 is disposed higher than the entirety of the second attachment portion 42.

At least part of the wing 50 is disposed higher than the entirety of the arm 43.

At least part of the second attachment portion 42 is disposed lower than the entirety of the arm 43.

At least part of the second arm 45 is disposed lower than the entirety of the first arm 44.

The first arm 44 extends in the up-down direction Z in vehicle front view.

The second arm 45 extends in the transverse direction Y in vehicle front view.

The second arm 45 is connected to a lower portion of the first arm 44. The second arm 45 extends inward in the transverse direction Y from the first arm 44. The second arm 45 extends to the second attachment portion 42.

The first arm 44 overlaps the wing 50 in vehicle front view. For example, the first arm 44 includes a portion overlapping the wing 50 in vehicle front view and a portion not overlapping the wing 50 in vehicle front view.

The inner surface 44a overlaps the wing 50 in vehicle front view. For example, the entirety of the inner surface 44a overlaps the wing 50 in vehicle front view.

The second arm 45 overlaps the wing 50 in vehicle front view. For example, the second arm 45 includes a portion overlapping the wing 50 in vehicle front view and a portion not overlapping the wing 50 in vehicle front view.

The wing 50 has a top edge 58 in vehicle front view. The top edge 58 extends in the transverse direction Y in vehicle front view. The top edge 58 extends outward in the transverse direction Y from the first attachment portion 41 in vehicle front view. Specifically, the top edge 58 extends outward in the transverse direction Y and downward. The top edge 58 extends outward in the transverse direction Y and downward in the longitudinal direction X.

The top edge 58 is disposed higher than the entirety of the second arm 45. The entirety of the top edge 58 is disposed higher than the entirety of the second arm 45. The top edge 58 does not overlap the second arm 45 in vehicle front view. The top edge 58 does not intersect the second arm 45 in vehicle front view.

The wing 50 has a bottom edge 59 in vehicle front view. The bottom edge 59 extends in the transverse direction Y in vehicle front view. The bottom edge 59 extends outward in the transverse direction Y from the first attachment portion 41 in vehicle front view. The bottom edge 59 curves convexly downward in vehicle front view. Specifically, the bottom edge 59 extends outward in the transverse direction Y and downward, and then extends outward in the transverse direction Y and upward. The bottom edge 59 extends outward in the transverse direction Y and downward in the up-down direction Z, and then extends outward in the transverse direction Y and upward in the up-down direction Z.

The bottom edge 59 overlaps the second arm 45 in vehicle front view. The bottom edge 59 intersects with the second arm 45 in vehicle front view.

The second arm 45 has a top edge 48 in vehicle front view. The top edge 48 extends outward in the transverse direction Y from the second attachment portion 42 in vehicle front view. The top edge 48 extends outward in the transverse direction Y and upward in the up-down direction Z in vehicle front view. More specifically, the top edge 48 is slightly inclined upward toward the outside in the transverse direction Y in vehicle front view.

The bottom edge 59 intersects with the top edge 48 in vehicle front view. The bottom edge 59 includes a portion located below the top edge 48 in vehicle front view. The bottom edge 59 includes another portion located above the top edge 48 in vehicle front view.

The second arm 45 has a bottom edge 49 in vehicle front view. The bottom edge 49 is disposed lower than the top edge 48. At least part of the bottom edge 49 is disposed lower than the entirety of the top edge 48. For example, the entirety of the bottom edge 49 is disposed lower than the entirety of the top edge 48. The bottom edge 49 extends outward in the transverse direction Y from the second attachment portion 42 in vehicle front view. The bottom edge 49 extends outward in the transverse direction Y and upward in the up-down direction Z in vehicle front view. More specifically, the bottom edge 49 is slightly inclined upward toward the outside in the transverse direction Y in vehicle front view.

The bottom edge 59 intersects with the bottom edge 49 in vehicle front view. The bottom edge 59 includes a portion located below the bottom edge 49 in vehicle front view. The bottom edge 59 includes another portion located above the bottom edge 49 in vehicle front view.

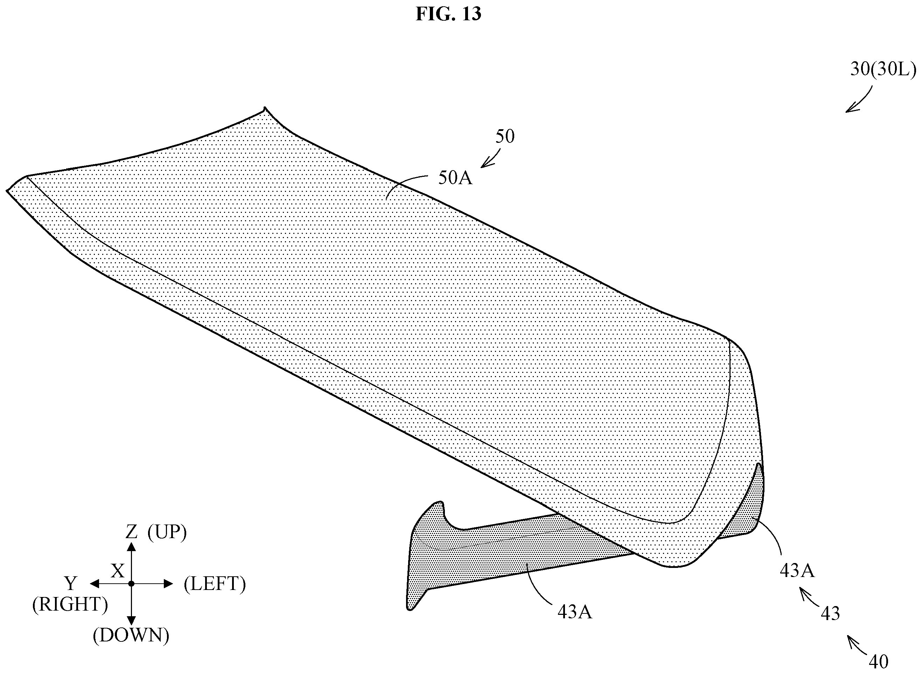

Fig. 13 is a front view of the left wing member 30L. The wing 50 has a first exposed portion 50A. The first exposed portion 50A is a portion of the wing 50 that is visually recognizable in vehicle front view.

The first exposed portion 50A has a first area S1 in vehicle front view. First area S1 is a projected area of the first exposed portion 50A projected on a virtual plane perpendicular to the longitudinal direction X.

The arm 43 includes a second exposed portion 43A. The second exposed portion 43A is a portion of the arm 43 that is visually recognizable in vehicle front view. The second exposed portion 43A does not include a portion of the arm 43 overlapping the wing 50 in vehicle front view.

The second exposed portion 43A has a second area S2 in vehicle front view. The second area S2 is a projected area of the second exposed portion 43A projected on a virtual plane perpendicular to the longitudinal direction X.

The second area S2 is sufficiently small.

The second area S2 is less than 30% of the first area S1.

For example, the second area S2 is less than 20% of the first area S1.

For example, the second area S2 is less than 10% of the first area S1.

### 3. Disposing Locations of wing member 30

The disposing location of the wing member 30 will be described.

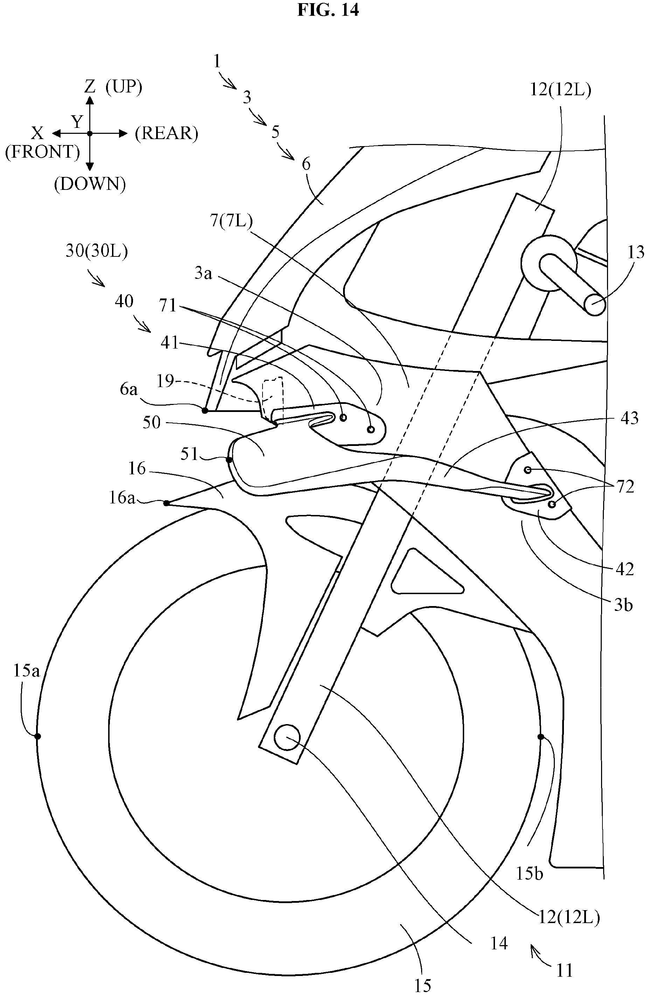

Fig. 14 is a left side view of the front part of the straddled vehicle 1. At least part of the wing member 30 overlaps the front cowl 5 in vehicle side view.

At least part of the wing member 30 is disposed lower than the center cowl 6. For example, the entirety of the wing member 30 is disposed lower than the center cowl 6. The entirety of the wing member 30 is disposed lower than the entirety of the center cowl 6.

The center cowl 6 has a front end 6a. The entirety of the wing member 30 is disposed more rearward than the front end 6a. The entirety of the wing 50 is disposed more rearward than the front end 6a. The front end 51 is disposed more rearward than the front end 6a.

At least part of the wing member 30 overlaps the side cowl 7 in vehicle side view.

The wing 50 includes a portion that does not overlap the side cowl 7 in vehicle side view. At least part of the wing 50 does not overlap the side cowl 7 in vehicle side view. At least part of the wing 50 is disposed below and in front of the side cowl 7 in vehicle side view. At least part of the wing 50 is disposed lower and more forward than the side cowl 7 in vehicle side view.

The front end 51 does not overlap the side cowl 7 in vehicle side view. The front end 51 is disposed below and in front of the side cowl 7 in vehicle side view. The front end 51 is disposed lower and more forward than the side cowl 7 in vehicle side view.

The first attachment portion 41 overlaps the side cowl 7 in vehicle side view.

The second attachment portion 42 overlaps the side cowl 7 in vehicle side view.

The arm 43 overlaps the side cowl 7 in vehicle side view.

A portion of the vehicle body 3 to which the first attachment portion 41 is attached is referred to as "first portion 3a". A portion of the vehicle body 3 to which the first attachment portion 41 is attached is referred to as "second portion 3b". The first portion 3a and the second portion 3b are inseparable from each other. The first portion 3a and the second portion 3b are integrally molded.

In the present embodiment, the side cowl 7 includes the first portion 3a and the second portion 3b. For example, the side cowl 7 is inseparable into a plurality of parts.

More specifically, the left side cowl 7L includes the first portion 3a and the second portion 3b. The left side cowl 7L is inseparable into a plurality of parts.

For example, the side cowl 7 and the center cowl 6 are separable from each other. For example, the left side cowl 7L and the center cowl 6 are separable from each other.

The straddled vehicle 1 includes one or more fastening members 71. The fastening member 71 fastens the first attachment portion 41 and the side cowl 7. The fastening member 71 is inserted into the through-hole 41a.

The straddled vehicle 1 includes one or more fastening members 72. The fastening member 72 fastens the second attachment portion 42 and the side cowl 7. The fastening member 72 is inserted into the through-hole 42a.

The fastening member 71 and the fastening member 72 are, for example, rivets. The fastening member 71 and the fastening member 72 are made of, for example, synthetic resin.

The straddled vehicle 1 may include a first attachment sheet (not illustrated). The first attachment sheet is provided between the first attachment portion 41 and the side cowl 7. The first attachment sheet brings the first attachment portion 41 and the side cowl 7 into close contact with each other.

The straddled vehicle 1 may include a second attachment sheet (not illustrated). The second attachment sheet is provided between the second attachment portion 42 and the side cowl 7. The second attachment sheet brings the second attachment portion 42 and the side cowl 7 into close contact with each other.

The first attachment sheet and the second attachment sheet include, for example, an adhesive. The first attachment sheet and the second attachment sheet are, for example, double-sided tapes. The first attachment sheet and the second attachment sheet have, for example, elasticity. The first attachment sheet and the second attachment sheet are, for example, thin films.

The wing member 30 is detachable from the vehicle body 3. By removing the fastening members 71 and 72, the wing member 30 is removed from the vehicle body 3.

At least part of the wing member 30 is disposed at a position more forward than the entirety of the steering device 11.

The front end 51 is disposed at a position more forward than the entirety of the steering device 11.

At least part of the wing member 30 is disposed more forward than the entirety of the front fork 12.

The wing member 30 extends from a position more forward than the entirety of the front fork 12 to a position more rearward than the entirety of the front fork 12.

The wing member 30 overlaps the front fork 12 in vehicle side view.

At least part of the wing 50 is disposed more forward than the front fork 12. At least part of the wing 50 is disposed more forward than the entirety of the front fork 12. The front end 51 is disposed more forward than the front fork 12. The front end 51 is disposed more forward than the entirety of the front fork 12.

At least part of the first attachment portion 41 is disposed more forward than the entirety of the front fork 12.

At least part of the second attachment portion 42 is disposed more rearward than the entirety of the front fork 12.

The arm 43 overlaps the front fork 12 in vehicle side view.

The wing member 30 is disposed lower than the handlebar 13. The entirety of the wing member 30 is disposed lower than the entirety of the handlebar 13. The wing member 30 does not overlap the handlebar 13 in vehicle side view.

At least part of the wing member 30 is disposed more forward than the entirety of the handlebar 13.

The wing 50 is disposed more forward than the entirety of the handlebar 13. The front end 51 is disposed more forward than the entirety of the handlebar 13. For example, the entirety of the wing 50 is disposed more forward than the entirety of the handlebar 13.

At least part of the first attachment portion 41 is disposed more forward than the entirety of the handlebar 13.

The second attachment portion 42 is disposed below the handlebar 13 in vehicle side view. The entirety of the second attachment portion 42 is disposed lower than the entirety of the handlebar 13 in vehicle side view.

At least part of the arm 43 is disposed more forward than the entirety of the handlebar 13.

The wing member 30 is disposed at a position more forward than the front axle 14. At least part of the wing member 30 is disposed at a position more forward than the entirety of the front axle 14.

The wing member 30 extends from a position more forward than the entirety of the front axle 14 to a position more rearward than the entirety of the front axle 14.

The wing member 30 is disposed higher than the front axle 14. The entirety of the wing member 30 is disposed higher than the entirety of the front axle 14. The wing member 30 does not overlap the front axle 14 in vehicle side view.

At least part of the wing 50 is disposed more forward than the front axle 14. At least part of the wing 50 is disposed more forward than the entirety of the front axle 14. The front end 51 is disposed at a position more forward than the front axle 14. The front end 51 is disposed at a position more forward than the entirety of the front axle 14.

For example, the wing 50 extends from a position more forward than the front axle 14 to a position more rearward than the front axle 14. The wing 50 extends from a position more forward than the entirety of the front axle 14 to a position more rearward than the entirety of the front axle 14.

At least part of the first attachment portion 41 is disposed more rearward than the entirety of the front axle 14. For example, the first attachment portion 41 extends from a position more rearward than the entirety of the front axle 14 to a position more forward than the entirety of the front axle 14.

At least part of the second attachment portion 42 is disposed more rearward than the entirety of the front axle 14. For example, the entirety of the second attachment portion 42 is disposed more rearward than the entirety of the front axle 14.

At least part of the arm 43 is disposed more rearward than the entirety of the front axle 14. For example, the entirety of the arm 43 is disposed more rearward than the entirety of the front axle 14.

The wing member 30 is disposed higher than the front wheel 15. At least part of the wing member 30 is disposed higher than the entirety of the front wheel 15.

At least part of the wing 50 is disposed higher than the entirety of the front wheel 15. The front end 51 is disposed higher than the entirety of the front wheel 15.

At least part of the first attachment portion 41 is disposed higher than the entirety of the front wheel 15.

At least part of the second attachment portion 42 is disposed higher than the entirety of the front wheel 15.

At least part of the second attachment portion 42 is disposed more rearward than the front wheel 15. At least part of the second attachment portion 42 is disposed more rearward than the entirety of the front wheel 15.

At least part of the arm 43 is disposed higher than the entirety of the front wheel 15.

The front wheel 15 has a front end 15a. The entirety of the wing member 30 is disposed more rearward than the front end 15a. The entirety of the wing 50 is disposed more rearward than the front end 15a. The front end 51 is disposed more rearward than the front end 15a.

The front wheel 15 has a rear end 15b. At least part of the wing member 30 is disposed more rearward than the rear end 15b. The wing member 30 includes a portion disposed more forward than the rear end 15b and a portion disposed more rearward than the rear end 15b. The entirety of the wing 50 is disposed more forward than the rear end 15b. The entirety of the first attachment portion 41 is disposed more forward than the rear end 15b. At least part of the arm 43 is disposed more forward than the rear end 15b. At least part of the second attachment portion 42 is disposed more rearward than the rear end 15b.

The wing member 30 extends from a position more forward than the rear end 15b to a position more rearward than the rear end 15b. The second attachment portion 42 extends from a position more forward than the rear end 15b to a position more rearward than the rear end 15b. For example, the arm 43 extends from a position more forward than the rear end 15b to a position more rearward than the rear end 15b.

The wing member 30 extends from a position more forward than the front axle 14 to a position more rearward than the rear end 15b.

The wing member 30 is disposed higher than the front fender 16. At least part of the wing member 30 is disposed higher than the entirety of the front fender 16.

At least part of the wing 50 is disposed higher than the entirety of the front fender 16. The front end 51 is disposed higher than the entirety of the front fender 16.

At least part of the first attachment portion 41 is disposed higher than the entirety of the front fender 16.

At least part of the second attachment portion 42 is disposed higher than the entirety of the front fender 16.

At least part of the arm 43 is disposed higher than the entirety of the front fender 16.

The front fender 16 has a front end 16a. The entirety of the wing member 30 is disposed more rearward than the front end 16a. The entirety of the wing 50 is disposed more rearward than the front end 16a. The front end 51 is disposed more rearward than the front end 16a.

At least part of the wing member 30 is disposed more forward than the entirety of the headlight 19.

The wing member 30 extends from a position more forward than the entirety of the headlight 19 to a position more rearward than the entirety of the headlight 19.

The wing member 30 is disposed lower than the headlight 19. At least part of the wing member 30 is disposed lower than the entirety of the headlight 19. At least part of the headlight 19 is disposed higher than the entirety of the wing member 30. The wing member 30 overlaps the headlight 19 in vehicle side view.

At least part of the wing 50 is disposed more forward than the headlight 19. At least part of the wing 50 is disposed more forward than the entirety of the headlight 19. The front end 51 is disposed more forward than the headlight 19. The front end 51 is disposed more forward than the entirety of the headlight 19.

The wing 50 extends from a position more forward than the entirety of the headlight 19 to a position more rearward than the entirety of the headlight 19.

At least part of the wing 50 is disposed lower than the entirety of the headlight 19.

The front end 51 is disposed lower than the entirety of the headlight 19.

At least part of the first attachment portion 41 is disposed more rearward than the entirety of the headlight 19. At least part of the headlight 19 is disposed more forward than the entirety of the first attachment portion 41. The first attachment portion 41 overlaps the headlight 19 in vehicle side view.

At least part of the second attachment portion 42 is disposed more rearward than the entirety of the headlight 19. For example, the entirety of the second attachment portion 42 is disposed more rearward than the entirety of the headlight 19.

At least part of the second attachment portion 42 is disposed lower than the entirety of the headlight 19. For example, the entirety of the second attachment portion 42 is disposed lower than the entirety of the headlight 19.

At least part of the arm 43 is disposed more rearward than the entirety of the headlight 19. For example, the entirety of the arm 43 is disposed more rearward than the entirety of the headlight 19.

At least part of the arm 43 is disposed lower than the entirety of the front headlight 19. For example, the entirety of the arm 43 is disposed lower than the entirety of the headlight 19.

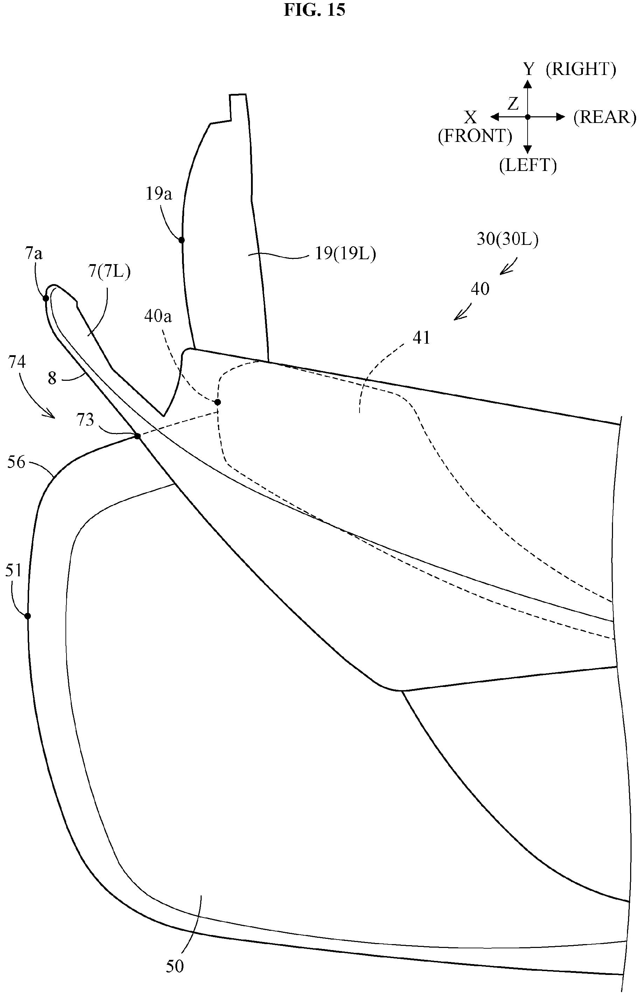

Fig. 15 is a plan view of a part of the straddled vehicle 1.

At least part of the wing member 30 is disposed more forward than the side cowl 7. At least part of the wing member 30 is disposed more forward than the entirety of the side cowl 7.

At least part of the wing 50 is disposed at the position more forward than the side cowl 7. At least part of the wing 50 is disposed at a position more forward than the entirety of the side cowl 7. The front end 51 is disposed at a position more forward than the side cowl 7. The front end 51 is disposed at a position more forward than the entirety of the side cowl 7.

The side cowl 7 has a front end 7a. The front end 7a is disposed more rearward than the front end 51.

The front end 7a is disposed more forward than the front end 40a of the support 40.

The wing 50 extends from a position more forward than the front end 7a to a position more rearward than the front end 7a.

The side cowl 7 has a leading edge 8. The leading edge 8 is also referred to as a "front edge 8." In vehicle plan view, the leading edge 8 intersects the leading edge 56 of the wing 50 at an intersection point 73. In vehicle plan view, the wing 50 and the side cowl 7 overlap behind the intersection point 73. In vehicle plan view, the wing 50 and the side cowl 7 do not overlap in front of the intersection point 73.

In vehicle plan view, the leading edge 8 and the leading edge 56 are separated in front of the intersection point 73. In vehicle plan view, the leading edge 8 and the leading edge 56 are separated in the transverse direction Y in front of the intersection point 73. The leading edge 8 extends forward and inward in the transverse direction Y from the intersection point 73. The leading edge 8 extends forward in the longitudinal direction X and inward in the transverse direction Y from the intersection point 73. The leading edge 56 extends forward and outward in the transverse direction Y from the intersection point 73. The leading edge 56 extends forward in the longitudinal direction X and outward in the transverse direction Y from the intersection point 73. A separation distance between the leading edge 8 and the leading edge 56 increases towards the front. The separation distance in the transverse direction Y between the leading edge 8 and the leading edge 56 increases towards the front.

The wing 50 and the side cowl 7 form a gap 74 in vehicle plan view. The gap 74 is located in front of intersection point 73 in vehicle plan view. The gap 74 is located more outward in the transverse direction Y than the leading edge 8 in vehicle plan view. The gap 74 is located more inward in the transverse direction Y than the leading edge 56 in vehicle plan view. The gap 74 becomes wider toward the front.

At least part of the wing 50 is disposed more outward than the headlight 19 in the transverse direction Y. At least part of the wing 50 is disposed more outward than the entirety of the headlight 19 in the transverse direction Y.

The front end 51 is disposed more outward than the headlight 19 in the transverse direction Y. The front end 51 is disposed more outward than the entirety of the headlight 19 in the transverse direction Y.

The headlight 19 has a front end 19a. The front end 7a is located more forward than the front end 19a. The front end 40a is disposed more rearward than the front end 19a. The front end 51 is disposed more forward than the front end 19a.

### 4. Effects of Embodiment

The wing member 30 is for the straddled vehicle 1. The wing member 30 includes the support 40 and the wing 50. The wing 50 is supported by the support 40. The support 40 has the front end 40a. The wing 50 includes the forward protrusion 60. The forward protrusion 60 is located more forward than the front end 40a. Thus, the wing 50 extends more forward than the support 40. The wing 50 generates a downforce. Therefore, it is easy for the wing member 30 to generate a downforce at a relatively front position. In other words, it is easy to further shift the generation position of the downforce forward. For example, it is easy for the wing member 30 to generate a downforce at a position more forward than the front end 40a. Therefore, it is easy to cause the downforce to act on the front wheel 15. It is easy to cause the downforce to act downward on the front wheel 15. Therefore, it is easy for the wing member 30 to press the front wheel 15 against the road surface. As a result, the front wheel 15 properly comes into contact with the road surface. The front wheel 15 suitably grips the road surface.

The support 40 includes the first attachment portion 41, the second attachment portion 42, and the arm 43. The first attachment portion 41 is attached to the vehicle body 3 of the straddled vehicle 1. The first attachment portion 41 is joined to the wing 50. The second attachment portion 42 is disposed more rearward than the first attachment portion 41. The second attachment portion 42 is attached to the vehicle body 3. The arm 43 is joined to the second attachment portion 42. The arm 43 is joined to the wing 50. In short, the support 40 supports the wing 50 by both the first attachment portion 41 and the second attachment portion 42. In this way, the support 40 has a structure suitable for firmly supporting the wing 50.

The wing 50 has the trailing edge 54 in vehicle plan view. The trailing edge 54 can be rephrased as a "rear edge 54." The trailing edge 54 includes the curved portion 55. The curved portion 55 curves convexly forward in vehicle plan view. Therefore, it is easy to reduce the weight of the wing 50. Furthermore, it is easy to reduce the air resistance of the wing 50. Thus, the wing 50 has a shape suitable for firmly supporting the wing 50.

As mentioned above, the structure of the support 40 is suitable for firmly supporting the wing 50. The shape of the wing 50 is also suitable for firmly supporting the wing 50. Therefore, it is easy to firmly support the wing 50. As a result, it is easy for the wing member 30 to have sufficient rigidity. It is easy for the wing member 30 to have sufficient strength. For example, the stress generated in the support 40 is not excessively large. For example, the stress generated in the wing 50 is not excessively large.

In summary, the wing member 30 generates a downforce at a relatively forward position. The wing member 30 has sufficient rigidity. The wing member 30 has sufficient strength.

As described above, it is easy to reduce the air resistance of the wing 50. Therefore, the influence of the wing 50 on the maximum speed of the straddled vehicle 1 is small. For example, the wing 50 does not significantly reduce the maximum speed of the straddled vehicle 1.

At least part of the forward protrusion 60 is disposed more outward than the front end 40a in the transverse direction Y. Therefore, the downforce generated by the forward protrusion 60 has an appropriate magnitude.

For example, the downforce generated by the forward protrusion 60 is not excessively large. For example, the downforce generated by the forward protrusion 60 is not larger than necessary. Therefore, the influence of the forward protrusion 60 on the steering of the steering device 11 is small. For example, the forward protrusion 60 does not cause the steering of the steering device 11 to become stiff. For example, the forward protrusion 60 does not cause the handling of the handlebar 13 to become heavy. For example, the wing member 30 does not cause the handling of the handlebar 13 to become heavy. Furthermore, the influence of the forward protrusion 60 on the maximum speed of the straddled vehicle 1 is small. For example, the forward protrusion 60 does not significantly reduce the maximum speed of the straddled vehicle 1.

For example, the entirety of the forward protrusion 60 is disposed more outward than the front end 40a in the transverse direction Y. Therefore, the downforce generated by the forward protrusion 60 has an appropriate magnitude.

The trailing edge 54 has the front end 54a. At least part of the forward protrusion 60 is disposed more outward than the front end 54a in the transverse direction Y. Therefore, the downforce generated by the forward protrusion 60 has an appropriate magnitude.

The wing 50 has the front end 51. The front end 51 is disposed more outward than the front end 40a in the transverse direction Y. Therefore, the downforce generated by the forward protrusion 60 has an appropriate magnitude.

The wing 50 has the length D1 in the transverse direction Y. The forward protrusion 60 has the length D2 in the transverse direction Y. The length D2 is 50% or more of the length D1. Therefore, it is easy to increase the downforce generated by the forward protrusion 60.

For example, the length D2 is 60% or more of the length D1. Therefore, it is easier to increase the downforce generated by the forward protrusion 60.

For example, the length D2 is 70% or more of the length D1. Therefore, it is easier to increase the downforce generated by the forward protrusion 60.

For example, the length D2 is 80% or more of the length D1. Therefore, it is easier to increase the downforce generated by the forward protrusion 60.

For example, the length D2 is 90% or more of the length D1. Therefore, it is easier to increase the downforce generated by the forward protrusion 60.

The wing 50 has the leading edge 56 in vehicle plan view. The leading edge 56 can be rephrased as a "front edge 56." The leading edge 56 includes the first leading edge portion 56a. The first leading edge portion 56a extends forward from the first attachment portion 41. Therefore, it is easy for the wing 50 to include the forward protrusion 60.

The first leading edge portion 56a extends forward and outward in the transverse direction Y from the first attachment portion 41. Therefore, it is easy to dispose at least part of the forward protrusion 60 more outward than the front end 40a of the support 40 in the transverse direction Y.

The leading edge 56 includes the second leading edge portion 56b and the third leading edge portion 56c. The second leading edge portion 56b extends outward in the transverse direction Y from the first leading edge portion 56a. The third leading edge portion 56c extends rearward from the second leading edge portion 56b. Therefore, it is easy to dispose at least part of the second leading edge portion 56b more outward than the front end 40a in the transverse direction Y.

The second leading edge portion 56b is disposed more forward than the front end 40a. Therefore, the second leading edge portion 56b constitutes at least part of the forward protrusion 60. Therefore, it is easy to dispose at least part of the forward protrusion 60 more outward than the front end 40a in the transverse direction Y.

The wing 50 includes the proximal portion 64, the intermediate portion 65, and the distal portion 66. The proximal portion 64 is joined to the first attachment portion 41. The intermediate portion 65 is located more outward than the proximal portion 64 in the transverse direction Y. The distal portion 66 is located more outward than the intermediate portion 65 in the transverse direction Y. The proximal portion 64 has the length G1 in the longitudinal direction X. The intermediate portion 65 has the length G2 in the longitudinal direction X. The distal portion 66 has the length G3 in the longitudinal direction X. The length G2 is shorter than the length G1. The length G2 is shorter than the length G3.

As described above, the length G2 is the shortest among the length G1, the length G2, and the length G3. Therefore, it is easy to reduce the weight of the intermediate portion 65. Furthermore, it is easy to reduce the air resistance of the intermediate portion 65. Thus, the intermediate portion 65 has a shape suitable for firmly supporting the wing 50.

The proximal portion 64 is joined to the first attachment portion 41. As described above, the length G1 is longer than the length G2. That is, the proximal portion 64 is long. Therefore, it is easy for the first attachment portion 41 to firmly support the proximal portion 64. Thus, the proximal portion 64 also has a shape suitable for firmly supporting the wing 50.

As described above, it is easy to reduce the air resistance of the intermediate portion 65. Therefore, the influence of the intermediate portion 65 on the maximum speed of the straddled vehicle 1 is small. For example, the intermediate portion 65 does not significantly reduce the maximum speed of the straddled vehicle 1.

The distal portion 66 is joined to the arm 43. As described above, the length G3 is longer than the length G2. That is, the distal portion 66 is long. Therefore, it is easy for the arm 43 to firmly support the distal portion 66. Thus, the distal portion 66 has a shape suitable for firmly supporting the wing 50.

The arm 43 generates no downforce. The arm 43 generates substantially no downforce. Therefore, the air resistance of the arm 43 is relatively small. Therefore, it is easy for the second attachment portion 42 to support the arm 43.

The wing 50 has the first exposed portion 50A that is visible in vehicle front view. The arm 43 includes the second exposed portion 43A that is visible in vehicle front view. The first exposed portion 50A has the first area S1 in vehicle front view. The second exposed portion 43A has the second area S2 in vehicle front view. The second area S2 is less than 30% of the first area S1. The first area S1 is sufficiently larger than the second area S2. Therefore, it is easy for the wing 50 to generate the downforce.

The second area S2 is sufficiently smaller than the first area S1. For this reason, the air resistance of the arm 43 is relatively low. Therefore, it is easy for the second attachment portion 42 to support the arm 43.

As described above, the air resistance of the arm 43 is relatively low. Therefore, the influence of the arm 43 on the maximum speed of the straddled vehicle 1 is relatively small. For example, the arm 43 does not significantly reduce the maximum speed of the straddled vehicle 1.

As described above, the air resistance of the arm 43 is relatively low. Therefore, rigidity required for the arm 43 is low. The strength required for the arm 43 is low. Therefore, it is easy to reduce the weight of the arm 43. Therefore, it is easier for the second attachment portion 42 to support the arm 43.

For example, the second area S2 is less than 20% of the first area S1. Therefore, it is easier for the wing 50 to generate the downforce. Furthermore, it is easier for the second attachment portion 42 to support the arm 43.

For example, the second area S2 is less than 10% of the first area S1. Therefore, it is easier for the wing 50 to generate the downforce. Furthermore, it is easier for the second attachment portion 42 to support the arm 43.

The arm 43 includes the first arm 44. The first arm 44 is joined to the wing 50. The first arm 44 extends in the longitudinal direction X in vehicle plan view. Therefore, it is easy to reduce the air resistance of the first arm 44. In this manner, the first arm 44 has a shape with small air resistance.

The arm 43 includes the second arm 45. The second arm 45 is joined to the first arm 44. The second arm 45 is joined to the second attachment portion 42. The second arm 45 extends in the transverse direction Y in vehicle front view. The second arm 45 is disposed more rearward than the wing 50. The second arm 45 overlaps the wing 50 in vehicle front view. Therefore, it is easy for the wing 50 to block the second arm 45 from the airflow. Therefore, although the second arm 45 extends in the transverse direction Y in vehicle front view, it is easy to reduce the air resistance of the second arm 45. In this manner, the second arm 45 is disposed at a position where the air resistance is small.

As described above, the first arm 44 has a shape with less air resistance. The second arm 45 is disposed at a position where the air resistance is small. Therefore, it is easy to reduce the air resistance of the arm 43. Therefore, it is easy for the second attachment portion 42 to support the arm 43.

The wing 50 has the bottom edge 59 in vehicle front view. The second arm 45 has the top edge 48 in vehicle front view. The bottom edge 59 intersects with the top edge 48 in vehicle front view. Therefore, it is easy for the second arm 45 to have a portion overlapping with the wing 50 in vehicle front view.

The wing 50 has the bottom edge 59 in vehicle front view. The second arm 45 has the bottom edge 49 in vehicle front view. The bottom edge 59 intersects with the bottom edge 49 in vehicle front view. Therefore, it is easy for the second arm 45 to have a portion overlapping with the wing 50 in vehicle front view.

The second arm 45 has a plate shape substantially parallel to the longitudinal direction X. Therefore, it is easy to reduce the air resistance of the second arm 45. In this manner, the second arm 45 has a shape with small air resistance. Therefore, it is easier to reduce the air resistance of the arm 43. Therefore, it is easier for the second attachment portion 42 to support the arm 43.

The first arm 44 has a plate shape substantially parallel to the longitudinal direction X. Therefore, it is easier to reduce the air resistance of the first arm 44. In this manner, the first arm 44 has a shape with less air resistance. Therefore, it is easier to reduce the air resistance of the arm 43. Therefore, it is easier for the second attachment portion 42 to support the arm 43.

The wing 50 has the cross section 68 perpendicular to the longitudinal direction X. The cross section 68 has the inner cross-sectional portion 68a and the outer cross-sectional portion 68b. The inner cross-sectional portion 68a is joined to the first attachment portion 41. The inner cross-sectional portion 68a extends in the horizontal direction. Therefore, the inner cross-sectional portion 68a does not prevent access to the through-hole 41a of the first attachment portion 41. Therefore, it is easy to insert the fastening member 71 into the through-hole 41a. It is also easy to remove the fastening member 71 from the through-hole 41a. Therefore, it is easy to attach and detach the wing member 30 to and from the vehicle body 3.

The straddled vehicle 1 includes the front wheel 15, the front axle 14, the vehicle body 3, and the wing member 30. The front axle 14 supports the front wheel 15. The wing member 30 includes the support 40 and the wing 50. The wing 50 is supported by the support 40. The support 40 has the front end 40a. The wing 50 includes the front end 51. The front end 51 is located more forward than the front end 40a. Thus, the wing 50 extends forward from the support 40. The wing 50 generates a downforce. Therefore, it is easy for the wing member 30 to generate a downforce at a relatively front position. For example, it is easy for the wing member 30 to generate a downforce at a position more forward than the front end 40a of the support 40.

The front end 51 is located more forward than the front axle 14. Therefore, it is easier for the wing member 30 to generate a downforce at a relatively front position. For example, it is easy for the wing 50 to generate a downforce at a position more forward than the front axle 14. Therefore, it is easy to cause the downforce to act on the front wheel 15. It is easy to cause the downforce to act downward on the front wheel 15. Therefore, it is easy for the wing member 30 to press the front wheel 15 against the road surface. As a result, the front wheel 15 properly comes into contact with the road surface. The front wheel 15 suitably grips the road surface.

The support 40 includes the first attachment portion 41, the second attachment portion 42, and the arm 43. The first attachment portion 41 is attached to the vehicle body 3. The first attachment portion 41 is joined to the wing 50. The second attachment portion 42 is disposed more rearward than the first attachment portion 41. The second attachment portion 42 is attached to the vehicle body 3. The arm 43 is joined to the second attachment portion 42. The arm 43 is joined to the wing 50. In short, the support 40 supports the wing 50 by both the first attachment portion 41 and the second attachment portion 42. In this way, the support 40 has a structure for robustly supporting the wing 50.

The wing 50 has the trailing edge 54 in vehicle plan view. The trailing edge 54 can be rephrased as a "rear edge 54." The trailing edge 54 includes the curved portion 55. The curved portion 55 curves convexly forward in vehicle plan view. Therefore, it is easy to reduce the weight of the wing 50. Furthermore, it is easy to reduce the air resistance of the wing 50. Thus, the wing 50 has a shape suitable for robustly supporting the wing 50.

As mentioned above, the structure of the support 40 is suitable for robustly supporting the wing 50. The shape of the wing 50 is also suitable for robustly supporting the wing 50. Therefore, it is easy to robustly support the wing 50. As a result, it is easy for the wing member 30 to have sufficient rigidity. It is easy for the wing member 30 to have sufficient strength.

In summary, the straddled vehicle 1 includes the wing member 30. Therefore, the straddled vehicle 1 generates the downforce at a relatively front position. Therefore, it is easy to cause the downforce to act on the front wheel 15. Further, the wing member 30 has sufficient rigidity. The wing member 30 has sufficient strength.

The vehicle body 3 includes the first portion 3a and the second portion 3b. The first portion 3a is for attaching the first attachment portion 41. The second portion 3b is for attaching the second attachment portion 42. The first portion 3a and the second portion 3b are inseparable. Therefore, it is easy to attach the wing member 30 to the vehicle body 3. It is easy to remove the wing member 30 from the vehicle body 3.

The vehicle body 3 includes the front cowl 5 for supporting the support 40. Therefore, it is easy to position the front end 51 of the wing 50 more forward than the front axle 14.

The vehicle body 3 includes the side cowl 7 for supporting the support 40. Therefore, it is easy to position the front end 51 of the wing 50 more forward than the front axle 14.

The straddled vehicle 1 includes the headlight 19. The front end 51 is disposed more forward than the headlight 19. Therefore, it is easy to position the front end 51 more forward than the front axle 14.

The straddled vehicle 1 includes the front fork 12. The front fork 12 supports the front axle 14. The front end 51 is disposed more forward than the front fork 12. Therefore, it is easy to position the front end 51 more forward than the front axle 14.

The wing member 30 is disposed more outward than the front fork 12 in the transverse direction Y. Therefore, the downforce generated by the wing member 30 has an appropriate magnitude.

The wing member 30 extends from a position more forward than the front fork 12 to a position more rearward than the front fork 12. Therefore, the wing member 30 is relatively long in the longitudinal direction X. Therefore, it is easy for the wing member 30 to have sufficient rigidity. It is easy for the wing member 30 to have sufficient strength.

The wing member 30 extends to a position more rearward than the front wheel 15. Therefore, the wing member 30 is relatively long in the longitudinal direction X. Therefore, it is easy for the wing member 30 to have sufficient rigidity. It is easy for the wing member 30 to have sufficient strength.

At least part of the second attachment portion 42 is disposed more rearward than the front wheel 15. Therefore, even when the wing member 30 extends to a position more rearward than the front wheel 15, it is easy for the second attachment portion 42 to support the arm 43 and the wing 50. Therefore, it is easy to extend the wing member 30 to a position more rearward than the front wheel 15.

### 5. Modifications

This invention is not limited to the embodiment described above, but may be modified as follows.
(1) At least part of the forward protrusion 60 may be disposed more inward than the front end 40a of the support 40 in the transverse direction Y. For example, the forward protrusion 60 may include a portion disposed more inward than the front end 40a in the transverse direction Y and a portion disposed more outward than the front end 40a in the transverse direction Y.
(2) The first leading edge portion 56a may extend forward from the first attachment portion 41. The first leading edge portion 56a may extend forward and inward in the transverse direction Y from the first attachment portion 41.
(3) The front end 51 of the wing 50 may be disposed in front of the front end 40a of the support 40. Specifically, the front end 51 may be disposed at the same position as the front end 40a in the transverse direction Y. In other words, the front end 51 and the front end 40a may be aligned in the longitudinal direction X. Alternatively, the front end 51 of the wing 50 may be disposed more inward than the front end 40a in the transverse direction Y.

The front end 51 may be disposed in front of the front end 54a of the trailing edge 54. Specifically, the front end 51 may be disposed at the same position as the front end 54a in the transverse direction Y. In other words, the front end 51 and the front end 54a may be aligned in the longitudinal direction X. The front end 51 may be disposed on the first plane E. Alternatively, the front end 51 may be disposed more inward than the front end 54a in the transverse direction Y. The front end 51 may be disposed more outward than the front end 54a in the transverse direction Y.

(4) The wing 50 may generate a downforce at least at one of a position more forward than the front axle 14 and a position more rearward than the front axle 14. For example, the wing 50 may generate a downforce at a position more forward than the front axle 14. For example, the wing 50 may generate a downforce at a position more rearward than the front axle 14. For example, the wing 50 may generate a downforce at a position more forward than the front axle 14 and may generate a downforce at a position more rearward than the front axle 14.

(5) The first attachment portion 41 may be attached to the vehicle body 3 other than the side cowl 7. For example, the first attachment portion 41 may be attached to the center cowl 6. Alternatively, the first attachment portion 41 may be attached to the vehicle body frame 4.

(6) The second attachment portion 42 is attached to the vehicle body 3 other than the side cowl 7. For example, the second attachment portion 42 may be attached to the center cowl 6. Alternatively, the second attachment portion 42 may be attached to the vehicle body frame 4.

(7) The first portion 3a and the second portion 3b may be separable. For example, the first portion 3a may be included in a first member, and the second portion 3b may be included in a second member. The second member is different from the first member. The first member and the second member are separable from each other. The first member is, for example, the center cowl 6. The second member is, for example, the side cowl 7.

(8) The fastening member 71 may be, for example, at least one of a rivet, a screw, a pin, a clip, a bolt, and a nut. The fastening member 72 may be, for example, at least one of a rivet, a screw, a pin, a clip, a bolt, and a nut.

(9) In the embodiment, the number of front wheels 15 is one. However, the present invention is not limited to this. The number of front wheels 15 may be two. In the embodiment, the number of rear wheels 25 is one. The present invention is not limited to this. The number of rear wheels 25 may be two.

(10) In the embodiment, the straddled vehicle 1 may include an electric motor as a power source. For example, the straddled vehicle 1 may include the electric motor in addition to the engine 23. Alternatively, the straddled vehicle 1 may include the electric motor instead of the engine 23.

(11) In the embodiment, the straddled vehicle 1 may be classified into a category other than the sports type. For example, the straddled vehicle 1 may belong to any of the categories of a street type, a scooter type, and an all-terrain vehicle.

(12) The foregoing embodiment and each of the modifications described in the above-described (1) to (11) may be further varied as appropriate by replacing or combining their constructions with the constructions of the other modifications.

### Reference Signs List

1: Straddled vehicle
3: Vehicle body
3a: First portion of vehicle body
3b: Second portion of vehicle body
4: Vehicle body frame
5: Front cowl
6: Center cowl
6a: Front end of center cowl
7: Side cowl
7a: Front end of side cowl
7L: Left side cowl
7R: Right side cowl
8: Leading edge of side cowl
11: Steering device
12: Front fork
12L: Left front fork
12R: Right front fork
13: Handlebar
14: Front axle
14L: Left end of front axle
14R: Right end of front axle
15: Front wheel
15a: Front end of front wheel
15b: Rear end of front wheel
16: Front fender
16a: Front end of front fender
19: Headlight
19L: Left headlight
19R: Right headlight
30: Wing member
30L: Left wing member
30R: Right wing member
32: Space of wing member
40: Support
40a: Front end of support
41: First attachment portion
42: Second attachment portion
43: Arm
43A: Second exposed portion of arm
44: First arm
45: Second arm
48: Top edge of second arm
49: Bottom edge of second arm
50: Wing
50A: First exposed portion of wing
51: Front end of wing
54: Trailing edge of wing
54a: Front end of trailing edge of wing
55: Curved portion of trailing edge of wing
56: Leading edge of wing
56a: First leading edge portion
56b: Second leading edge portion
56c: Third leading edge portion
58: Top edge of wing
59: Bottom edge of wing
60: Forward protrusion
64: Proximal portion
65: Intermediate portion
66: Distal portion
C: Vehicle center plane
D1: Length of wing in transverse direction Y (first length)
D2: Length of forward protrusion in transverse direction Y (second length)
F1: Length of wing in longitudinal direction
F2: Length of space of wing member in longitudinal direction
F3: Length of second arm in longitudinal direction
G1: Length of proximal portion in longitudinal direction (third length)
G2: Length of intermediate portion in longitudinal direction (fourth length)
G3: Length of distal portion in longitudinal direction (fifth length)
S1: First area of first exposed portion of wing
S2: Second area of second exposed portion of arm
X: Longitudinal direction of straddled vehicle
Y: Transverse direction of straddled vehicle
Z: Up-down direction of straddled vehicle

## Claims

1. A wing member (30) for a straddled vehicle (1), the wing member (30) comprising:
a support (40); and
a wing (50) supported by the support (40);
wherein the support (40) includes a front end (40a),
the wing (50) includes a forward protrusion (60) located more forward than the front end (40a) of the support (40),
the support (40) includes:
a first attachment portion (41) attached to a vehicle body (3) of the straddled vehicle (1) and joined to the wing (50);
a second attachment portion (42) disposed more rearward than the first attachment portion (41) and attached to the vehicle body (3) of the straddled vehicle (1); and
an arm (43) joined to the second attachment portion (42) and joined to the wing (50),
the wing (50) includes a trailing edge (54) in a plan view of the straddled vehicle (1), and
the trailing edge (54) of the wing (50) includes a curved portion (55) that curves convexly forward in a plan view of the straddled vehicle (1).

2. The wing member (30) according to claim 1, wherein at least part of the forward protrusion (60) is disposed more outward than the front end (40a) of the support (40) in a transverse direction (Y) of the straddled vehicle (1).

3. The wing member (30) according to claim 1 or 2, wherein
the trailing edge (54) of the wing (50) includes a front end (54a), and
at least part of the forward protrusion (60) is disposed more outward than the front end (54a) of the trailing edge (54) of the wing (50) in the transverse direction (Y) of the straddled vehicle (1).

4. The wing member (30) according to any one of claims 1 to 3, wherein
the wing (50) includes a front end (51), and
the front end (51) of the wing (50) is disposed more outward than the front end (40a) of the support (40) in the transverse direction (Y) of the straddled vehicle (1).

5. The wing member (30) according to any one of claims 1 to 4, wherein
the wing (50) includes a first length (D1) in the transverse direction (Y) of the straddled vehicle (1),
the forward protrusion (60) includes a second length (D2) in the transverse direction (Y) of the straddled vehicle (1), and
the second length (D2) is 50% or more of the first length (D1).

6. The wing member (30) according to any one of claims 1 to 5, wherein
the wing (50) includes a leading edge (56) in a plan view of the straddled vehicle (1), and
the leading edge (56) of the wing (50) includes a first leading edge portion (56a) extending forward from the first attachment portion (41).

7. The wing member (30) according to claim 6, wherein the first leading edge portion (56a) extends forward and outward in the transverse direction (Y) of the straddled vehicle (1) from the first attachment portion (41).

8. The wing member (30) according to claim 6 or 7, wherein
the leading edge (56) of the wing (50) includes:
a second leading edge portion (56b) extending outward in the transverse direction (Y) of the straddled vehicle (1) from the first leading edge portion (56a); and
a third leading edge portion (56c) extending rearward from the second leading edge portion (56b), and
the second leading edge portion (56b) is disposed more forward than the front end (40a) of the support (40).

9. The wing member (30) according to any one of claims 1 to 8, the wing (50) comprising:
a proximal portion (64) joined to the first attachment portion (41);
an intermediate portion (65) located more outward than the proximal portion (64) in the transverse direction (Y) of the straddled vehicle (1); and
a distal portion (66) located more outward than the intermediate portion (65) in the transverse direction (Y) of the straddled vehicle (1),
wherein the proximal portion (64) includes a third length (G1) in the longitudinal direction (X) of the straddled vehicle (1),
the intermediate portion (65) includes a fourth length (G2) in the longitudinal direction (X) of the straddled vehicle (1),
the distal portion (66) includes a fifth length (G3) in the longitudinal direction (X) of the straddled vehicle (1),
the fourth length (G2) is shorter than the third length (G1), and
the fourth length (G2) is shorter than the fifth length (G3).

10. The wing member (30) according to claim 9, wherein the distal portion (66) is joined to the arm (43).

11. The wing member (30) according to any one of claims 1 to 10, wherein
the wing (50) includes a first exposed portion (50A) that is visible in a front view of the straddled vehicle (1),
the arm (43) includes a second exposed portion (43A) that is visible in a front view of the straddled vehicle (1),
the first exposed portion (50A) includes a first area (S1) in a front view of the straddled vehicle (1),
the second exposed portion (43A) includes a second area (S2) in a front view of the straddled vehicle (1), and
the second area (S2) is less than 30% of the first area (S1).

12. The wing member (30) according to any one of claims 1 to 11, the arm (43) comprising:
a first arm (44) joined to the wing (50); and
a second arm (45) joined to the first arm (44) and joined to the second attachment portion (42),
wherein the first arm (44) extends in a longitudinal direction (X) of the straddled vehicle (1) in a plan view of the straddled vehicle (1),
the second arm (45) extends in the transverse direction (Y) of the straddled vehicle (1) in a front view of the straddled vehicle (1),
the second arm (45) is disposed more rearward than the wing (50), and
the second arm (45) overlaps the wing (50) in a front view of the straddled vehicle (1).

13. The wing member (30) according to claim 12, wherein the second arm (45) has a plate shape substantially parallel to a longitudinal direction (X) of the straddled vehicle (1).

14. A straddled vehicle (1) comprising:
a front wheel (15);
a front axle (14) that supports the front wheel (15);
a vehicle body (3); and
a wing member (30);
wherein the wing member (30) includes:
a support (40); and
a wing (50) supported by the support (40),
the support (40) includes a front end (40a),
the wing (50) includes a front end (51),
the front end (51) of the wing (50) is located more forward than the front end (40a) of the support (40),
the front end (51) of the wing (50) is located more forward than the front axle (14),
the support (40) includes:
a first attachment portion (41) attached to the vehicle body (3) and joined to the wing (50);
a second attachment portion (42) disposed more rearward than the first attachment portion (41) and attached to the vehicle body (3); and
an arm (43) joined to the second attachment portion (42) and joined to the wing (50),
the wing (50) includes a trailing edge (54) in a plan view of the straddled vehicle (1), and
the trailing edge (54) of the wing (50) includes a curved portion (55) that curves convexly forward in a plan view of the straddled vehicle (1).

15. The straddled vehicle (1) according to claim 14, wherein
the vehicle body (3) includes:
a first portion (3a) for attaching the first attachment portion (41); and
a second portion (3b) for attaching the second attachment portion (42), and the first portion (3a) and the second portion (3b) are inseparable.
